# EUROPEAN PATENT APPLICATION

(11) **EP 4 579 053 A2**
(43) Date of publication of application: **02.07.2025**
(21) Application number: 25176544.2
(22) Date of filing: 12.07.2023
(51) Int. Cl.: E05C 19/16

(54) **SAFETY SWITCH**

(30) Priority: 10.08.2022 JP 2022127825
(62) Divisional of application: 23184972.0
(71) Applicant: Keyence Corporation, Osaka-shi, Osaka 533-8555 (JP)
(72) Inventor: KOJIMA, Kenji, Osaka-shi, Osaka, 533-8555 (JP); SUGIURA, Yusuke, Osaka-shi, Osaka, 533-8555 (JP)
(74) Representative: Grünecker Patent- und Rechtsanwälte PartG mbB

(57) **Abstract**

The close contact between a surface to be attracted and an attracting surface when an openable and closable door is closed is established at a high level to form a state in which the surface to be attracted and the attracting surface overlap each other without a gap. An electromagnetic lock type safety switch includes an actuator including: a member to be magnetized on which a surface to be attracted corresponding to an attracting surface, formed on an electromagnet of a switch body, is formed; an actuator attachment portion for attaching the actuator to a movable portion (openable and closable door); and a movement mechanism supporting the member to be magnetized to be movable relative to the actuator attachment portion.

## Description

### BACKGROUND OF THE INVENTION

### 1. Field of the Invention

The invention relates to a safety switch.

### 2. Description of Related Art

In an environment in which an apparatus operates, there is a possibility that a human body is damaged by the apparatus in a state in which the human body can freely come into contact with the operating apparatus. In the environment in which the apparatus operates, an operation region in which the apparatus operates is comparted by a protective fence or a compartment panel in order to prevent the human body from being damaged by the operating apparatus, in other words, in order to realize a safe state. One method for realizing the safe state by comparting the operation region is a method in which an operation region is comparted by, a fixed portion such as a protective fence, to prevent a human body from entering the operation region, that is, the operation region is isolated from a region where the human body is present. Another method is a method of constructing a compartment system capable of comparting an operation region and limiting operation of an apparatus. In the compartment system, a compartment in which an operation region is comparted by a fixed portion, such as a protective fence, and then, an opening in a part of the compartment and a movable portion that opens and closes the opening are installed, that is, a compartment allowing a worker to enter the operation region is formed. In this compartment system, a control system is constructed so as to monitor the movable portion and control the apparatus operating in the operation region not to damage the human body in accordance with the monitoring result. In such a compartment system, a safety switch that monitors opening and closing of the movable portion is installed in a region of the opening where the movable portion is installed.

The safety switch includes a switch body arranged at the fixed portion of the compartment, and an actuator arranged on an openable and closable door constituting the movable portion of the compartment. The safety switch detects and outputs opening of the door, which is the movable portion, as a function for maintaining the operation region in a safe state, and the apparatus in the operation region is controlled to a state in which the human body is not damaged in response to the output from the safety switch in the entire compartment system. For example, a safety measure for an environment in which the apparatus operates is taken by adopting a system configuration in which the apparatus in the operation region is stopped in response to the output from the safety switch.

As one type of safety switch, a safety switch with a lock pin mechanism is disclosed in JP 2019-183541 A. The safety switch with a lock pin mechanism includes an actuator bolt installed in a compartment fixed portion and a switch body installed in a door, and the switch body is provided with a lock pin. The actuator bolt and the switch body are arranged at relative positions facing each other when the door is closed. In the lock pin mechanism, a locked state in which the actuator bolt and the lock pin are physically integrated is formed by mechanically engaging the lock pin with the actuator bolt. The safety switch with a lock pin mechanism is provided with a detection mechanism so as to be capable of detecting that the locked state of the safety switch with a lock pin mechanism, and performs output to indicate a state not being the locked state at least when the locked state is not formed. When the door is closed, and then the lock pin mechanism is brought into the locked state, the openable and closable door in the closed state is fixed in a state of being integrated with the compartment fixed portion. Conversely, an unlocked state is formed when the lock pin is removed from the actuator bolt, and the door can be opened.

JP 2016-510382 A discloses a safety switch with an electromagnetic lock mechanism, which is another type of safety switch. That is, the safety switch with an electromagnetic lock mechanism includes an electromagnet and an actuator magnetized member that is attracted to the electromagnet. The actuator magnetized member is installed in a door constituting a movable portion, and a switch body including an electromagnet is installed in a compartment fixed portion such as a protective fence. The electromagnet is driven such that the actuator magnetized member is attracted to the electromagnet, thereby forming a door-locked state. The safety switch includes a display unit. The display unit displays a safe state of an operation region.

JP 2016-510382 A also discloses a module including a monitoring sensor and a monitoring actuator for monitoring opening and closing of the door. The monitoring actuator is installed in the openable and closable door, and the monitoring sensor is installed in the compartment fixed portion. When the monitoring actuator moves away from or approaches the monitoring sensor in accordance with opening and closing of the door, which is the movable portion, the monitoring sensor generates a door signal including a first state signal indicating "the door has been opened" or a second state signal indicating "the door has been closed".

In a safety switch including a door lock mechanism, a function for safely maintaining an operation region is to monitor opening and closing of an openable and closable door and output a result of the monitoring to a control apparatus capable of controlling an apparatus operating in the operation region, and a door lock function contributes to maintaining a closed state the openable and closable door.

As a characteristic of the safety switch including the electromagnetic lock mechanism as the door lock mechanism, a state in which an attracting surface of the electromagnet and a surface to be attracted of the actuator are in close contact with each other is required in order to exhibit a sufficient attracting force for maintaining the closed state of the openable and closable door. In other words, if there is a gap between the attracting surface and the surface to be attracted, it is difficult to exhibit the attracting force as designed. Thus, the attracting force as designed is sometimes not exhibited in a case where the attracting surface and the surface to be attracted do not come into close contact with each other even in the closed state of the openable and closable door, for example, in a case where a moving range of the openable and closable door is limited due to a door stopper of the openable and closable door or displacement of the openable and closable door after attachment of the safety switch so that the surface to be attracted of the actuator arranged on the openable and closable door does not come into contact with the attracting surface.

Regarding a configuration for bringing an attracting surface and a surface to be attracted into close contact with each other, in JP 2005-528738 A, a socket that is stretchably deformable between a connection element and a base element in a configuration in which an iron piece (counterelement) is fixed to the base element via the connection element. The iron piece collides with an electromagnet with an operation in which a door closes. At this time, the iron piece is pushed in as the socket is deformed, and thus, an impact when the iron piece collides with the electromagnet is absorbed by the socket. According to such a configuration, a safety switch can be arranged in such a positional relationship that the electromagnet and the actuator collide with each other when the door is closed in order to bring the attracting surface and the surface to be attracted into close contact with each other.

That is, JP 2005-528738 A discloses a configuration in which the surface to be attracted moves in a direction of being pushed in as the configuration for bringing the attracting surface and the surface to be attracted into close contact with each other.

As described above, it is difficult to exhibit the electromagnetic force as designed even if a slight gap with an extent of, for example, about one piece of paper, partially exists between the attracting surface and the surface to be attracted when the door is closed. Thus, for example, the safety switch is used to stop rotation of the door to be closed such that the attracting surface and the surface to be attracted reliably come into contact with each other when the door is closed. Therefore, an impact due to a collision of the door that rotates to a closed state is applied to the safety switch although a part of the impact is absorbed by a deformable element, and thus, a strong and relatively large housing that can withstand the impact is required.

### SUMMARY OF THE INVENTION

An object of the invention is to provide a small safety switch with an electromagnetic lock mechanism that can establish close contact between a surface to be attracted and an attracting surface at a high level when an openable and closable door is closed and form a state in which the surface to be attracted and the attracting surface overlap each other without a gap.

In view of the above technical problem, the invention provides a safety switch including: a switch body arranged in a compartment fixed portion of a compartment system that comparts an operation region in which an apparatus operates; and an actuator installed in a movable portion movable relative to the compartment fixed portion, the safety switch detecting that the actuator is within a predetermined range with respect to the switch body. The actuator includes: a member to be magnetized on which a surface to be attracted, which corresponds to an attracting surface formed on an electromagnet provided in the switch body, is formed; an actuator attachment portion configured to attach the actuator to the movable portion; and a movement mechanism which supports the member to be movable relative to the actuator attachment portion to set a relative position of the surface to be attracted of the member with respect to the actuator attachment portion at a position offset toward the attracting surface of the switch body when the actuator is in the predetermined range with respect to the switch body as compared with a position when the actuator is not in the predetermined range with respect to the switch body.

According to the invention, the actuator is offset toward the switch body side in a process of closing an openable and closable door. Thus, if the openable and closable door is movable to a position where the surface to be attracted can come into contact with the surface to be attracted by the offset of the actuator, a close contact state between the attracting surface and the surface to be attracted is formed by the movement mechanism. As a result, the close contact state between the surface to be attracted and the attracting surface can be established at a high level.

Operational effects and other objects of the invention will be apparent from the following detailed description of preferred aspects for carrying out the invention.

### BRIEF DESCRIPTION OF THE DRAWINGS

FIG. 1 is a front view of a protective fence and an openable and closable door where a safety switch of an embodiment is installed;
FIG. 2 is a cross-sectional view taken along line II-II in FIG. 1;
FIG. 3 is a view for describing a box-type apparatus to which a safety switch of the invention is applicable;
FIG. 4 is a perspective view of an actuator included in the safety switch of the embodiment;
FIG. 5 is a perspective view of a switch body included in the safety switch of the embodiment as viewed obliquely from the front and obliquely from above;
FIG. 6 is a front view of the switch body illustrated in FIG. 5;
FIG. 7 is a side view of the switch body illustrated in FIG. 5;
FIG. 8 is a longitudinal cross-sectional view of the switch body illustrated in FIG. 5;
FIG. 9 is a view illustrating the switch body in a state in which a housing is detached from the switch body illustrated in FIG. 4;
FIG. 10 is a view for describing an operational effect related to an arrangement position of a display unit included in the safety switch of the embodiment;
FIG. 11 is a view for describing a state in which an attracting surface of an electromagnet and a surface to be attracted of the actuator overlap each other;
FIG. 12 is a block diagram for describing an electrical configuration of the switch body included in the embodiment;
FIG. 13 is a functional block diagram of a first MCU illustrated in FIG. 12;
FIG. 14 is a functional block diagram of a second MCU illustrated in FIG. 12;
FIG. 15 is a list for describing a display mode of the display unit;
FIG. 16 is a view for describing a method for determining whether or not the attracting surface and the surface to be attracted are in close contact with each other;
FIG. 17 is a longitudinal cross-sectional view of the actuator included in the safety switch of the embodiment;
FIG. 18 is a view for describing an action of a compression coil spring included in the actuator illustrated in FIG. 17, in which (I) is a plan view of the compression coil spring, (II) is a side view of the compression coil spring in an unloaded state, and (III) is a side view of the compression coil spring when a load is applied;

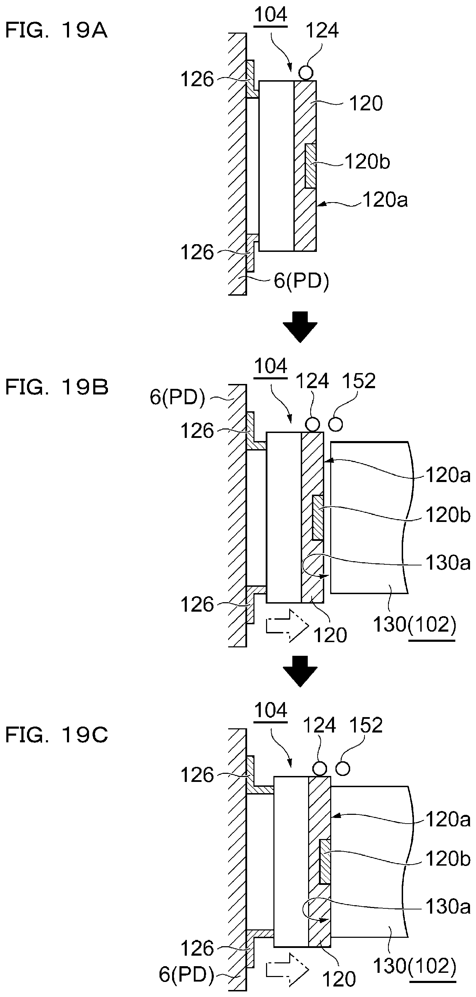

FIG. 19 is a view for describing a process of aligning an orientation of the attracting surface and an orientation of the surface to be attracted in the safety switch of the embodiment, in which (I) illustrates a standby state of the actuator when the door is opened, (II) illustrates a state in which the surface to be attracted moves forward toward the attracting surface under an attractive force of a permanent magnet when the actuator approaches the electromagnet in a process of closing the door, and (III) indicates a state in which the surface to be attracted is in close contact with the attracting surface under the attractive force of the permanent magnet;
FIG. 20 is a longitudinal cross-sectional view of the actuator included in the safety switch of the embodiment, in which (I) illustrates the standby state, (II) illustrates a state in which the surface to be attracted is moved forward to a maximum extent by an forward movement mechanism, and (III) illustrates a state in which the orientation of the surface to be attracted is changed by a swing mechanism;
FIG. 21 is a flowchart for describing that an OFF state of current supply of the electromagnet is maintained in the process of aligning the orientation of the surface to be attracted with the orientation of the attracting surface under the attractive force of the permanent magnet, and the current supply of the electromagnet is turned ON after the surface to be attracted is brought into close contact with the attracting surface as a condition;
FIG. 22 is a view for describing a configuration of a first modification of the invention;
FIG. 23 is a view for describing a configuration of a second modification of the invention;
FIG. 24 is a view for describing a configuration of a third modification of the invention; and
FIG. 25 is a view for describing a configuration of a fourth modification of the invention.

### DETAILED DESCRIPTION OF PREFERRED EMBODIMENTS

### [Embodiments]

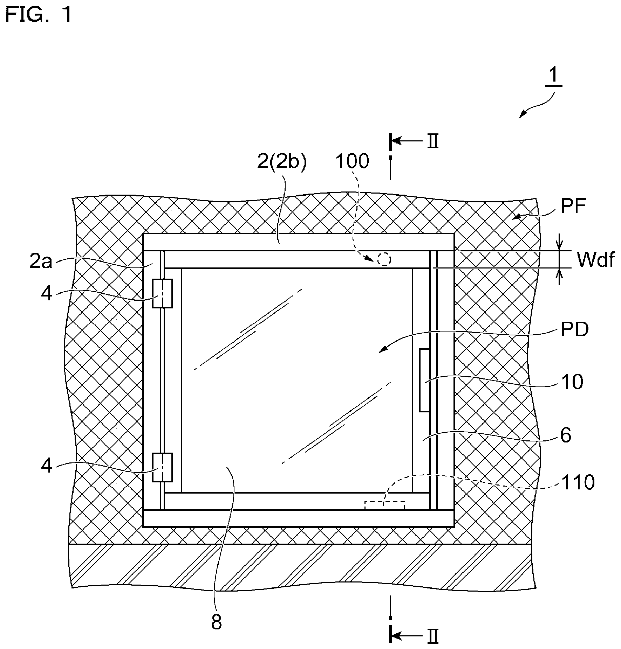

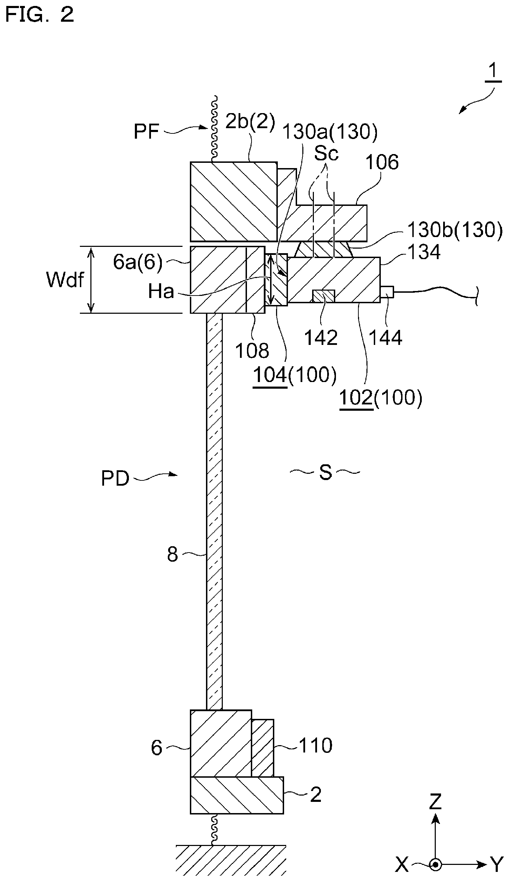

Hereinafter, preferred embodiments of the invention will be described with reference to the accompanying drawings. FIG. 1 is an explanatory view of an openable and closable door and a protective fence in which a safety switch of an embodiment, that is, a safety switch with an electromagnetic lock mechanism is installed as a compartment system 1. FIG. 2 is a cross-sectional view taken along line II-II in FIG. 1. In the drawings, reference sign PF denotes the protective fence, and reference sign PD denotes the openable and closable door. FIG. 1 is an explanatory view when the compartment system 1 is seen from outside an operation region S comparted by the compartment system 1. The compartment system 1 includes: the protective fence PF as a compartment fixed portion; the door PD constituting a movable portion movable relative to the compartment fixed portion; and a safety switch 100.

The compartment system 1 maintains the operation region S in a safe state by limiting operation of an apparatus inside the operation region S based on a safety-related output that is output from the safety switch 100. In the present embodiment, the safety switch 100 is arranged in the operation region S. The protective fence PF constitutes the compartment fixed portion of the compartment system 1 that comparts the operation region S in which the apparatus operates. An opening at which the door PD constituting the movable portion is installed with respect to the compartment fixed portion is formed by a door opening frame 2. Referring to FIG. 1, a plurality of hinges 4 separated up and down are provided on one side of the door PD constituting the movable portion, and the door PD is attached to a vertical frame portion 2a of the door opening frame 2 via the plurality of hinges 4. That is, the door PD is a single-swing door.

Referring to FIGS. 1 and 2, the door PD includes a door frame 6 and a transparent board 8 surrounded by the door frame 6. The door PD has the hinges 4 attached to one side thereof and a door operating portion 10 attached to the other side thereof (FIG. 1). When the door operating portion 10 is operated, a door latch (not illustrated) disengaged from the door opening frame 2 is opened, and the door PD can be opened.

FIG. 2 illustrates a state in which the door PD is closed, and the door frame 6 constituting the door PD is in contact with a door stopper 110 and is positioned. In FIG. 2, the operation region S comparted by the protective fence PF and the openable and closable door PD is a region located on the right side of the protective fence PF and the door PD on the paper surface of FIG. 2. The safety switch 100 is arranged on the operation region S side in relation to the door PD in the closed state. The safety switch 100 is arranged so as to be located on the operation region S side with respect to the door PD in the closed state of the door PD, whereby the safety switch 100 is arranged inside the operation region S. Referring to FIG. 2, the safety switch 100 includes a switch body 102 and an actuator 104. The switch body 102 is arranged inside the operation region S. Specifically, the switch body 102 is fixed to a surface of an upper side horizontal frame portion 2b of the door opening frame 2 on the operation region S side via a first bracket 106. The switch body 102 includes an electromagnet 130 having an attracting surface 130a. In the closed state of the door PD, the switch body 102 is installed in the door opening frame such that the attracting surface 130a faces the door PD, in other words, faces the outside of the operation region S. Note that arrows X, Y, and Z indicating three directions orthogonal to each other are illustrated in FIG. 2, but are associated with arrangement attitudes of the safety switch 100 as will be described later.

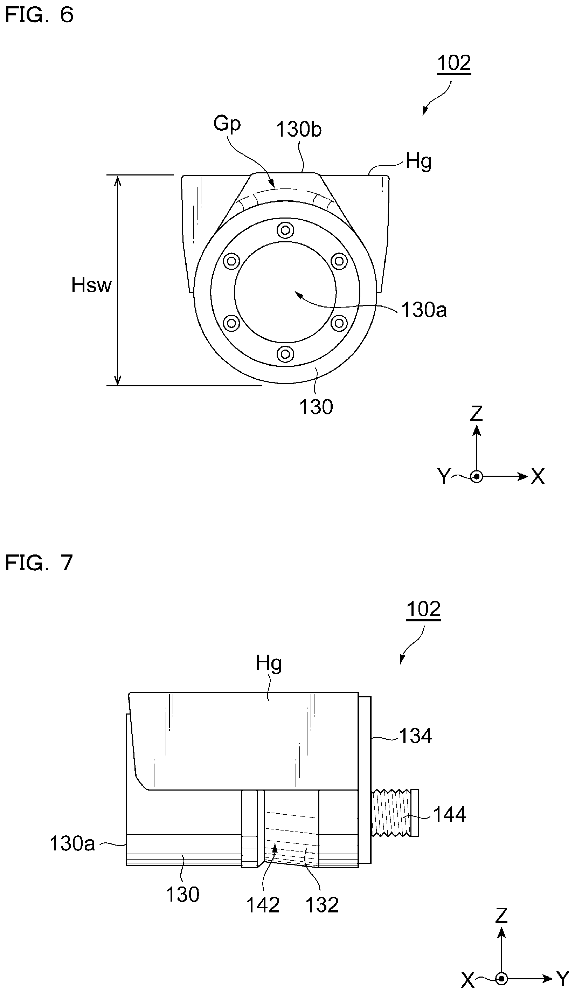

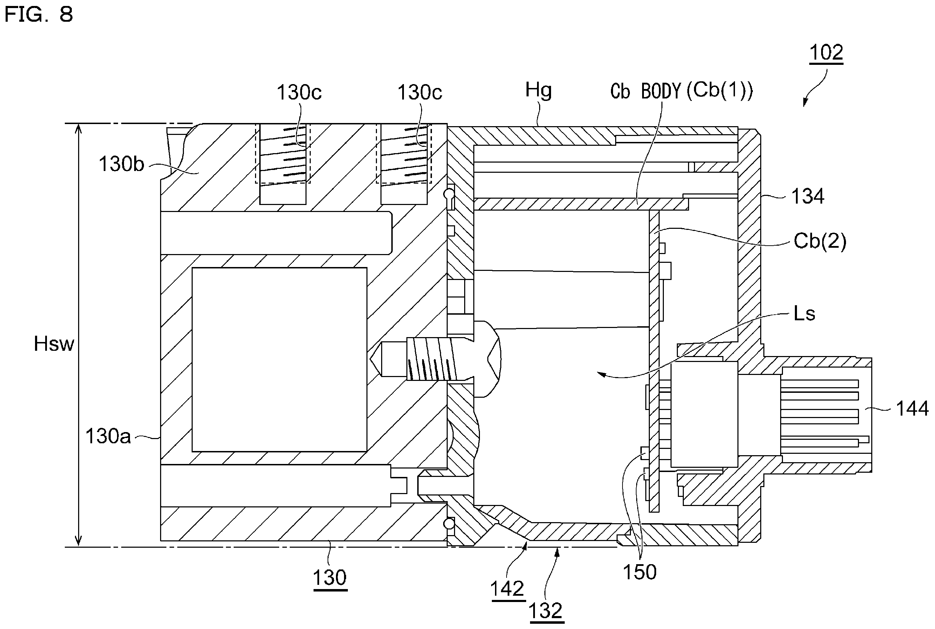

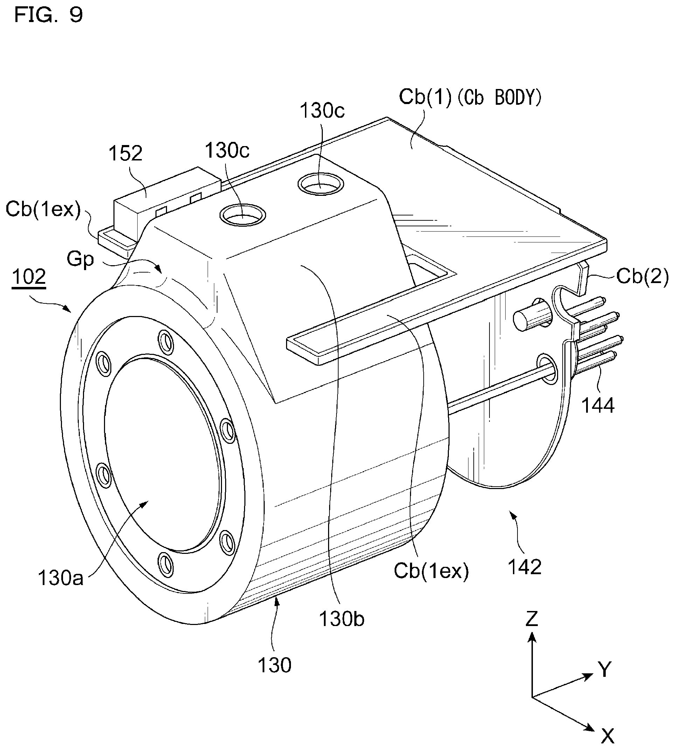

As will be described later with reference to FIG. 7 and the like, the switch body 102 of the safety switch 100 of the embodiment includes the electromagnet 130 (FIG. 8) and a board accommodating portion 132, and boards Cb(1) and Cb(2) (FIGS. 8 and 9) are accommodated in the board accommodating portion 132.

On the other hand, the actuator 104 is arranged on a surface of the door frame 6 on the operation region S side, and specifically, is fixed to an upper side frame portion 6a of the door frame 6 via a second bracket 108 (FIG. 2). The door opening frame 2 and the door frame 6 both have a closed rectangular cross section which is a known structure, but may have a U-shaped cross section or an L-shaped cross section as a modification.

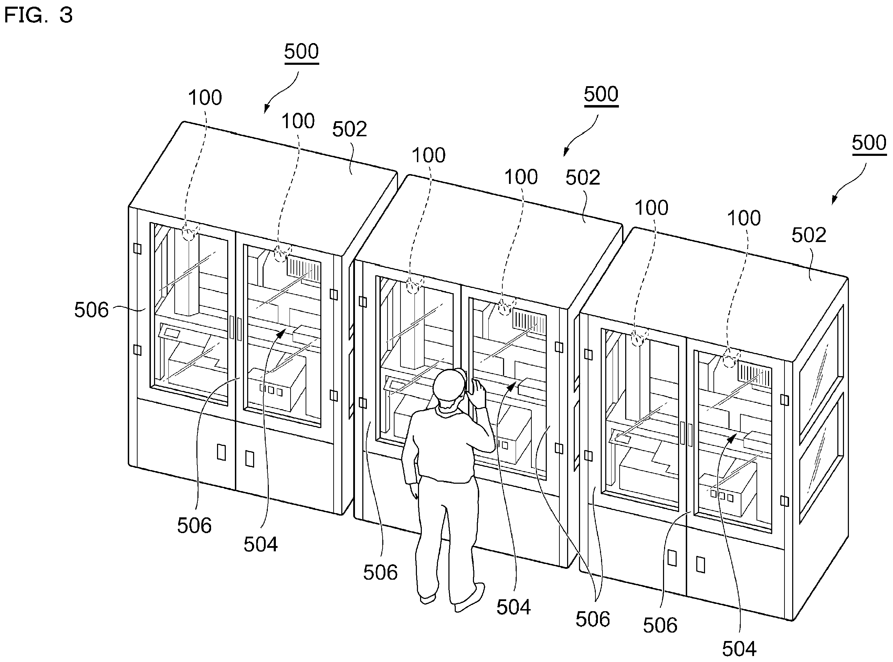

The door PD is related to an openable and closable door described in JP 2016-510382 W. On the other hand, FIG. 3 illustrates box-shaped apparatuses 500 each accommodating a work system. In FIG. 3, three apparatuses 500 are arranged side by side. A double-hinged openable and closable door 506 as an example of the door PD is attached to a box 502 of each of the apparatuses 500 such that a worker can manually access an apparatus 504 installed therein. Regarding the openable and closable door 506, the safety switch 100 can be installed in the box-shaped apparatus 500.

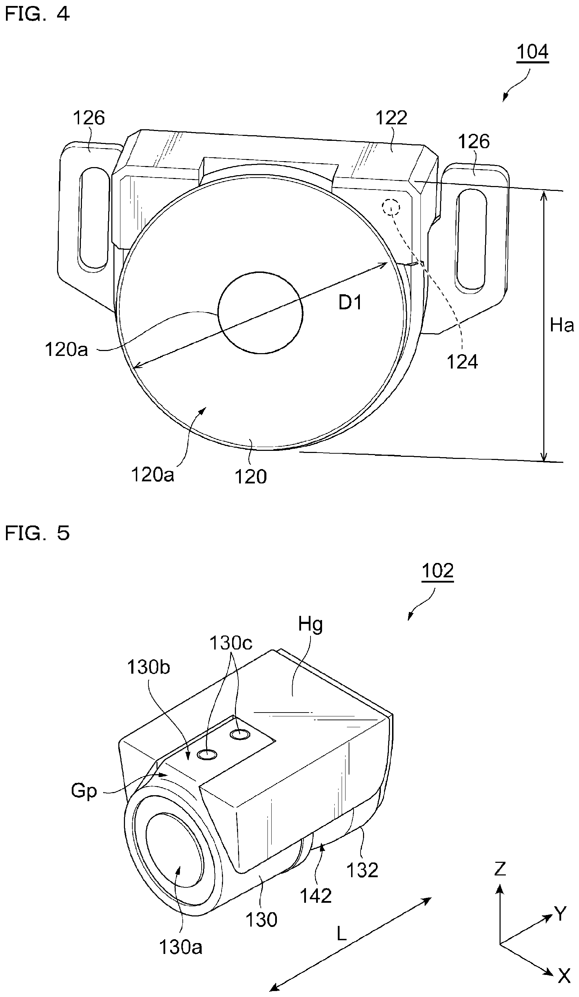

Hereinafter, as a typical example, an embodiment of the invention will be described based on the embodiment applied to the door PD disclosed in FIGS. 1 and 2. FIG. 4 is a substantial front view of the actuator 104 included in the safety switch 100, and is a view for describing a front shape of the actuator 104. The actuator 104 includes an iron piece 120, which is a member to be magnetized, as the main part, and includes a plastic molding 122, an actuator communication unit 124, and an attachment fitting 126 which is an actuator attachment portion. The iron piece 120 has a circular shape in a front view, and has a surface to be attracted 120a, which is attracted to the attracting surface 130a, on a front surface. A diameter of the iron piece 120 is indicated by reference sign D1. The iron piece 120 is attached to the plastic molding 122. The periphery of the iron piece 120 is covered with the plastic molding 122, and the actuator communication unit 124 is arranged in a mode of being covered with the plastic molding 122. The attachment fitting 126 is provided on a side opposite to the iron piece 120 with respect to the plastic molding 122, and has a shape extending to the left and right on the paper surface of FIG. 4. In the attachment fitting 126, a pair of attachment holes through which screws for fastening the attachment fitting are inserted is provided in a portion viewed from the front of the actuator 104. A pair of the attachment fittings 126 is fastened to the second bracket 108, and the actuator 104 is fixed to the door PD via the second bracket 108 (FIG. 2). In the closed state of the door PD, the actuator 104 and the switch body 102 have a relative positional relationship in which the actuator 104 is located on the surface of the door frame 6 on the operation region S side. That is, the actuator 104 is installed on the door frame 6 such that the surface to be attracted 120a of the iron piece 120 is oriented to the operation region S in the closed state of the door PD. On the other hand, the switch body 102 is located inside the operation region S. Note that the actuator 104 is fixed to the door PD via the second bracket 108 in the present embodiment, but it may be configured such that the attachment fitting 126 is directly fastened to the door frame 6 to fix the actuator 104 to the door PD.

An arrangement example when the actuator 104 is fixed to the door PD will be specifically described based on an arrangement example illustrated in FIG. 2. As described above, the actuator 104 is fixed to the upper side frame portion 6a of the door frame 6. In the present embodiment, the attachment fittings 126 are fixed such that the attachment holes of the pair of attachment fittings 126 of the actuator 104 are arranged side by side in the lateral direction, that is, in the longitudinal direction of the upper side frame portion 6a. In this installation example, reference sign Ha in FIG. 4 indicates q height of the iron piece 120 included in the actuator 104 and having a circular shape in the front view. In the installation example of FIG. 2, the actuator 104 is fixed to the door frame 6 in a state in which a direction of the height Ha is aligned with a direction of a width Wdf of the upper side frame portion 6a. The height Ha of the actuator 104 is equal to or smaller than the average width Wdf of the door frame 6 having a rectangular cross section (FIG. 2). A part of the actuator 104 installed on the door frame 6 may protrude to the inner side of the door frame 6, that is, to a site of the transparent board 8, but a protruding amount thereof is desirably as small as possible. As a result, it is possible to reduce the presence of the actuator 104 from hindering work.

In the safety switch 100 of the present embodiment, the electromagnet 130 of the switch body 102 and the iron piece 120 of the actuator 104 function as an electromagnetic lock mechanism. Then, the electromagnetic lock mechanism of the safety switch has been historically developed following a technical idea of a lock pin mechanism as described above. A design concept of a safety switch 100 with the electromagnetic lock mechanism of the embodiment will be described. In general, when a role of the safety switch is examined, an original request to maintain an operation region in a safe environment in the operation region in which an operating apparatus is arranged is realized by a function of detecting opening and closing of a door, and a role required for a door lock function is to allow the apparatus to continuously operate in the operation region. Therefore, it can be said that it is sufficient that the door lock function can realize continuous operation of the apparatus in the operation region. In other words, a basic requirement of the door lock function of the safety switch is to prevent inadvertent opening of the openable and closable door during the operation of the apparatus. This is because the operation of the apparatus is limited in the operation region by the function of the safety switch for maintaining the operation region in the safe environment when the openable and closable door is inadvertently opened. That is, it can be said that the essential role of the door lock function required for the safety switch is to prevent the operation of the apparatus in the operation region S (FIG. 2) or the box 502 (FIG. 3) from being interrupted by the inadvertent opening of the door PD or 506.

Conventionally, a door lock function of a safety switch has been designed to contribute to maintaining an operation region in a safe environment. Thus, an electromagnet having a strong magnetic force to such an extent that the door is not opened even with a relatively strong operation force has been also adopted for an electromagnetic lock mechanism. However, from a viewpoint of considering the role of the door lock function as allowing the apparatus to continuously operate instead of maintaining the safe environment, the degree of a magnetic force of the electromagnet adopted in the safety switch with an electromagnetic lock mechanism may be the same as or weaker than the conventional case. When the worker performs an operation of opening the door PD, it is possible to prevent the inadvertent opening of the openable and closable door by obtaining an operation force with which the worker can be asked of at least "Are you now performing an operation of opening the door PD according to your will?" regarding the operation force required to open the door PD. In order to open the door PD, if a certain operation force capable of confirming the will of the worker is obtained by the electromagnet, it is possible to prevent the inadvertent opening of the door PD without obtaining any more operation force.

Therefore, optionally, in a case where the degree of the magnetic force of the electromagnet 130 is set to be weaker than the conventional case, for example, in a case where the door PD includes an operating portion such as a door knob, a door latch is released when an operation force for rotating the door knob is applied to the door knob, and at least the electromagnet 130 having a magnetic force stronger than the operation force for releasing the door latch is used. This makes it possible to discourage the worker from opening the door PD, and to prevent the inadvertent opening of the door PD. Then, it is possible to avoid unexpected interruption of the operation of the apparatus caused by the inadvertent opening of the doors PD and 506.

Referring to FIG. 5, the switch body 102 has a screw hole 130c as an attachment portion for fixing the switch body 102 to the door opening frame 2 which is a fixed portion of the compartment system 1.

More specifically, the electromagnet 130 has a protrusion 130b protruding along a direction from the center of the attracting surface 130a toward the outside, and the screw hole 130c is provided in the protrusion 130b. When description is given with reference to the arrangement example illustrated in FIG. 2, the switch body 102 is fixed to the upper side horizontal frame portion 2b of the door opening frame 2 via the first bracket 106 having an L-shaped cross section (FIG. 2). When description is given with reference to the arrangement example of FIG. 2, the protrusion 130b is located so as to protrude from an upper portion of the electromagnet 130, a flat top surface of the protrusion 130b constitutes an attachment surface, and the screw hole 130c is provided in the attachment surface. This attachment surface may be formed on a side surface of the electromagnet 130.

For example, FIG. 5 illustrates the arrows X, Y, and Z indicating three directions orthogonal to each other.

Directions indicated by the arrows X, Y, and Z all correspond to arrangement attitudes of the safety switch 100, and the directions indicated by the arrows X, Y, and Z are referred to as an X-axis direction, a Y-axis direction, and a Z-axis direction, respectively. The Y-axis direction indicates a normal direction of the attracting surface 130a of the electromagnet 130. The Z-axis direction indicates a direction which is orthogonal to the Y-axis direction and parallel to the attracting surface 130a, and in which the protrusion 130b protrudes with respect to the center of the attracting surface 130a. The X-axis direction indicates a direction parallel to the attracting surface 130a and orthogonal to the Z axis. As illustrated in FIG. 2, since the safety switch 100 of the present embodiment is arranged such that the attracting surface 130a faces the door PD in the closed state, a normal direction of the door PD in the closed state coincides with the Y-axis direction. Further, the safety switch 100 of the present embodiment is arranged such that a direction in which the protrusion 130b protrudes with respect to the center of the attracting surface 130a is orthogonal to an extending direction of the upper side frame portion 6a of the door PD in the closed state and an extending direction of the upper side horizontal frame portion 2b of the door opening frame 2. Thus, in the present embodiment, the extending direction of the upper side frame portion 6a and the extending direction of the upper side horizontal frame portion 2b coincide with the X-axis direction, and a direction toward the operation region S with respect to the door PD, that is, a depth direction of the operation region S coincides with the Y-axis direction. Note that, in the following description, a direction from the door PD in the closed state toward the attracting surface 130a in a Y-axis direction and an opposite direction thereof are sometimes referred to as "rear or rearward" and "front or forward", respectively, and a direction from the attracting surface 130a toward the protrusion 130b in a Z-axis direction and an opposite direction thereof are sometimes referred to as "above, upper side, or upward" and "below, lower side, or downward", respectively.

FIGS. 5 to 9 are views related to the switch body 102. FIG. 5 is a perspective view of the switch body 102. FIG. 6 is a front view. FIG. 7 is a side view. As can be clearly seen from FIGS. 5 and 7, the switch body 102 has a substantially cylindrical overall shape extending in the Y-axis direction (normal direction of the attracting surface 130a). The switch body 102 includes the electromagnet 130 including the attracting surface 130a constituting one end surface in the Y-axis direction. A length L from the attracting surface 130a to the other end surface is longer than a diameter of the attracting surface 130a.

The attracting surface 130a forms the main part of the one end surface of the switch body 102. More specifically, referring to FIGS. 5 to 7, reference sign Hg in the drawings denotes a housing of the board accommodating portion 132. In a case where the housing Hg is provided in the periphery of the electromagnet 130, the attracting surface 130a protrudes from an end surface Hg(a), which is a part of the housing Hg and extends to the electromagnet 130, and the attracting surface 130a forms the one end surface of the switch body 102. As described above, the attracting surface 130a faces the surface to be attracted 120a of the actuator 104 when the door PD is closed.

As illustrated in FIG. 5, the switch body 102 includes the housing Hg including the board accommodating portion 132 that accommodates the boards, and a display unit 142 that performs display corresponding to the safety-related output that is output from the safety switch 100 based on a detection result of the actuator 104. The board accommodating portion 132 is located on a side opposite to the attracting surface 130a of the electromagnet 130 in the Y-axis direction. In other words, the board accommodating portion 132 is located at the rear of the electromagnet 130. Thus, a dimension in the X-axis direction and a dimension in the Z-axis direction of the entire switch body 102 are less likely to be larger than a dimension in the X-axis direction and a dimension in the Z-axis direction of the electromagnet 130. Further, the display unit 142 is located in the housing Hg on the side opposite to the attracting surface 130a with respect to the electromagnet 130 in the Y-axis direction, that is, at the rear of the electromagnet 130. The switch body 102 has a shape in which a dimension in the Y-axis direction is larger than both the dimension in the X-axis direction and the dimension in the Z-axis direction. Thus, an area occupied by the opening formed in the door opening frame 2 is likely to be smaller when viewed from the front as compared with other switch bodies that require the same capacity.

FIG. 6 is the front view of the switch body 102 as viewed from the front. A normal direction of the paper surface of FIG. 6 is parallel to the Y-axis direction. As described above, the board accommodating portion 132 is located at the rear of the electromagnet 130. Thus, when the switch body 102 is viewed from the front, most of the housing Hg including the board accommodating portion 132 is hidden by the electromagnet 130 as illustrated in FIG. 6. Therefore, it is possible to suppress an increase amount of an area occupied by the switch body 102 when viewed from the front caused by providing the housing Hg. In the present embodiment, a ratio of an area occupied by the housing Hg to an area occupied by the attracting surface 130a is small when viewed from the front.

As illustrated in FIG. 6, in a region occupied by the housing Hg when viewed from the front, a region located on a side where the screw hole 130c is provided with respect to the center of the attracting surface 130a is larger than a region located on a side opposite to the side where the screw hole 130c is provided with respect to the center of the attracting surface 130a. In other words, most of the housing Hg is located above the center of the attracting surface 130a in the front view. When the switch body 102 is fixed by screw hole 130c, a dead space is generated between a portion of the attracting surface 130a having a maximum dimension in the X-axis direction and the door opening frame 2 to which the switch body 102 is attached. When the dead space is utilized as the region where the housing Hg is provided, workability through the door opening frame 2 is less likely to deteriorate. Therefore, the housing Hg is configured such that an area occupied by the housing Hg in the front view is larger on the side where the screw hole 130c is provided with respect to the center of the attracting surface 130a, whereby the workability of work through the door opening frame 2 in which the switch body 102 is arranged is secured.

FIG. 7 is the side view of the switch body 102. The switch body 102 has the board accommodating portion 132 on the side opposite to the attracting surface 130a with respect to the electromagnet 130 (FIG. 8). Reference sign Hg denotes the housing of the board accommodating portion 132. In the board accommodating portion 132, a connector coupling portion 144 is provided on an end surface 134 on the side opposite to a side where the attracting surface 130a is located in the Y-axis direction, that is, on the rear side (FIGS. 7 and 8). The end surface 134 on the rear side is also an end surface of the switch body 102 on the side opposite to the side where the attracting surface 130a is located. The connector coupling portion 144 extends in a direction away from the attracting surface 130a along the Y-axis direction. Since the connector coupling portion 144 is provided on the end surface 134 of the board accommodating portion 132, it is unnecessary to position a cable around the switch body 102 regarding the arrangement of the cable connected to the connector coupling portion 144. Further, since the connector coupling portion 144 is provided on the end surface 134 of the board accommodating portion 132, at least a portion of the cable connected to the connector coupling portion 144 in the vicinity of the connector coupling portion 144 is located at the rear of the switch body 102. Thus, the cable reduces the possibility that the visibility of the display unit 142 from the front deteriorates. Further, when the cable connected to the connector coupling portion 144 is routed at the rear of the switch body 102 or routed above at a site where the screw hole 130c is located, the cable can be routed without being located in the vicinity of the opening formed by the door opening frame 2, so that workability of work through the door opening frame 2 is less likely to deteriorate.

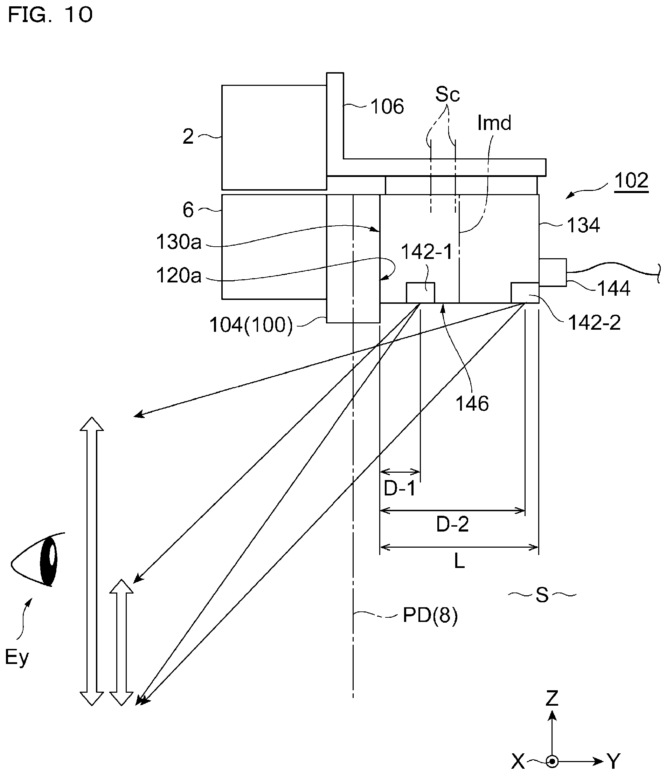

FIG. 8 is a longitudinal cross-sectional view of the switch body 102 taken along the Z-axis direction. FIG. 9 is a view for describing the arrangement of the two boards Cb(1) and Cb(2) arranged in the board accommodating portion 132. FIG. 9 is a perspective view of the switch body 102 in a state in which the housing Hg is detached to expose the board accommodating portion 132 as viewed obliquely from the front. FIG. 10 is an exploded perspective view of the electromagnet 130 and the housing Hg, and is a view of the switch body 102 as viewed from the rear.

Referring to FIG. 9, a part of a yoke portion of the electromagnet 130 is formed in a raised shape, and the protrusion 130b is formed by the raised portion although not particularly limited. The switch body 102 can be attached such that an attachment portion 103b is located on the side although being attached such that the protrusion 130b is located at the top in the arrangement example illustrated in FIG. 2.

As can be seen from FIGS. 5 and 8, the protrusion 130b protruding in the Z-axis direction has the two screw holes 130c separated at the front and rear, that is, in the Y-axis direction, and is fixed to the first bracket 106 having the L-shaped cross section using screws Sc threaded into the two screw holes 130c (FIG. 2).

Referring to FIGS. 8 and 9, the first board Cb(1) and the second board Cb(2) are accommodated in the board accommodating portion 132, and the first board Cb(1) and the second board Cb(2) are disposed in an orthogonal state. Specifically, the first board Cb(1) is arranged in an attitude so as to have a plate surface along the Y-axis direction, and the second board Cb(2) is arranged in an attitude so as to have a plate surface along the Z-axis direction. The second board Cb(2) is preferably arranged in a state of hanging down from the first board Cb(1) at a rear end portion of the first board Cb(1) when described in the state illustrated in FIG. 8.

As described above, the switch body 102 includes at least the display unit 142 (FIGS. 2, 5, and 7) that performs display corresponding to the safety-related output that is output from the switch body 102.

The display unit 142 is provided at a position visible from a side opposite to a surface of the switch body 102 where the screw holes 130c as the attachment portions are located. That is, the display unit 142 is provided at a position visible from the side where the attachment surface formed by the top surface of the protrusion 130b does not exist. When the switch body 102 is fixed to the door opening frame 2, the screw holes 130c are arranged and fixed so as to extend to the outer side from the opening formed in the door opening frame 2. Thus, a surface on the side opposite to the surface where the screw holes 130c are provided is arranged toward the inner side of the opening. In the example of FIG. 2, the switch body 102 is fixed to the upper side horizontal frame portion 2b of the door opening frame 2, a direction from the opening to the outer side is upward. Then, since the inner side of the opening is the lower side for the upper side horizontal frame portion 2b, the surface on which the display unit 142 is provided faces the lower side. In a case where the switch body 102 is fixed to a frame portion (a right frame portion on the paper surface of FIG. 1) of the door opening frame 2 on a side opposite to a side where the hinge 4 is provided although being fixed to the upper side horizontal frame portion 2b of the door opening frame 2 forming the opening in the present embodiment, the display unit 142 is located on the left side on the paper surface of FIG. 1. Since the display unit 142 is provided on the side opposite to the screw hole 130c in this manner, the display unit 142 faces the side of the door opening frame 2 opposite to the frame portion to which the switch body 102 is attached, that is, the inner side of the opening. In a case where the operation region S is viewed from the outer side of the door PD having the transparent board 8, the transparent board 8 is located on the inner side of the opening, and thus, the switch body is visible from the inner side of the opening. Thus, the visibility of the display unit 142 is improved as the display unit 142 is located on the inner side of the opening when being fixed to the door opening frame 2.

As can be clearly seen from FIG. 7, the display unit 142 has a shape continuously extending in the circumferential direction of the switch body 102, and extends from a surface on a side opposite to the attachment portion 103b in the Z-axis direction to an intermediate portion in the Z-axis direction of side surfaces facing each other in the X-axis direction. As a result, the worker who views the operation region S from the outside can visually recognize the display unit 142 not only from below but also from the side when description is given with reference to the installation example of FIG. 2. This visibility can be improved by providing the display unit 142 with a curved cross-sectional shape as disclosed in FIG. 7, and can be improved by providing the display unit 142 with a shape continuously extending in the circumferential direction of the switch body 102. Further, an outer surface of the display unit 142 has a tapered shape toward the attracting surface 130a in the Y-axis direction as can be clearly seen from FIG. 7 in order to enhance the visibility.

Referring to FIG. 8, in the board accommodating portion 132, a limited illumination space Ls is formed by the first board Cb(1) whose plate surface extends from the front to the rear, that is, along the Y-axis direction, and the second board Cb(2) whose plate surface extends along the Z-axis direction. Then, light of an LED 150 mounted on the second board Cb(2) is emitted toward the limited illumination space Ls, and as a result, is displayed through a light transmissive material forming a part of the display unit 142 and forming a part of the housing Hg. Of course, the LED 150 forming a light source may be provided on the first board Cb(1).

As described above, the switch body 102 is arranged inside the operation region S. Alighting state of the display unit 142 is visible from the outer side of the openable and closable door PD through the transparent board 8 (FIG. 2) of the openable and closable door PD. The visibility of the display unit 142 when the switch body 102 is viewed from the outside will be described with reference to FIG. 10. FIG. 10 is a schematic view created to describe the visibility of the display unit 142. In the drawing, reference sign Ey denotes an eye of the worker.

In FIG. 10, reference sign 142-1 denotes a display unit located proximal to the attracting surface 130a. That is, a distance D-1 between the attracting surface 130a and the display unit 142-1 in the Y-axis direction is relatively small. Reference sign 142-2 denotes a display unit located distal to the attracting surface 130a.

A distance D-2 between the attracting surface 130a and the display unit 142-2 in the Y-axis direction is relatively large.

As can be understood from FIG. 10, it can be seen that the display unit 142 has better visibility when the display unit 142 is viewed from the outside through the openable and closable door PD in the case of being arranged distally rather than proximally of the attracting surface 130a. Preferably, the display unit 142 is arranged at the rear of an intermediate line Imd including an intermediate line Imd having a half length of the total length L (FIG. 5) of the switch body 102 in the Y-axis direction.

A control circuit that generates a drive signal of the electromagnet 130, a power supply circuit, a communication circuit with the actuator 104, and the like are mounted on a body Cb(body) of the first board Cb(1). On the other hand, an indicator lamp control circuit and the like are mounted on the second board Cb(2).

Referring to FIG. 9, in the board accommodating portion 132, the first board Cb(1) whose plate surface extends along the Y-axis direction has a pair of left and right board extensions Cb(1ex) that are long and thin and extend in the Y-axis direction to the vicinity of the attracting surface 130a from the body Cb(body) which is located in the board accommodating portion 132 and on which the control circuit and the like are mounted. The pair of board extensions Cb(1ex) is located on both sides of the protrusion 130b interposed therebetween in the X-axis direction. With the configuration in which the pair of board extensions Cb(1ex) is located on both the sides of the protrusion 130b, the presence of the board extensions Cb(1ex) can prevent an increase in a height dimension of the switch body 102 in the Z-axis direction. Further, a part of the board extension Cb(1ex) is arranged at a position overlapping the electromagnet 130 as viewed in the Z-axis direction. Thus, the presence of the board extensions Cb(1ex) can reduce an increase in the dimensions of the switch body 102 in the Z-axis direction and the X-axis direction.

In the pair of board extensions Cb(1ex), a sensor-side coil (antenna coil) 152 is mounted at a distal end portion of one board extension Cb(1ex) (FIG. 9). The sensor-side coil 152 constitutes a detection unit that detects the presence of the actuator 104 within a predetermined range with respect to the switch body 102. Since the sensor-side coil 152 is mounted at the distal end portion of the one board extension Cb(1ex), the sensor-side coil 152 can be located close to the attracting surface 130a in the Y-axis direction. As a result, the detection capability of the sensor-side coil 152 can be enhanced. As is well known, the sensor-side coil 152 is arranged to correspond to the actuator communication unit 124 of the actuator 104 described above. At this time, the sensor-side coil 152 is covered with the housing Hg made of plastic, instead of metal, in order for the sensor-side coil 152 to detect the actuator communication unit 124. Thus, in the switch body, a part of the housing Hg is present on a surface facing the actuator 104 in addition to the attracting surface 130a. In the present embodiment, the workability through the door opening frame 2 in which the switch body 102 is arranged can be maintained by arranging a part of the housing Hg in the dead space as described above.

For example, in a process of closing the door PD, the iron piece 120 of the actuator 104 approaches the attracting surface 130a of the switch body 102 in conjunction with the closing operation of the door PD, and then, the iron piece 120 overlaps the attracting surface 130a of the switch body 102. The diameter D1 (FIG. 4) of the iron piece 120 (the surface to be attracted 120a) is designed to be a value larger than a diameter D2 of the attracting surface 130a. Based on a state in which the iron piece 120 overlaps the switch body 102 in a normal state, that is, the normal state in which a center O1 of the iron piece 120 and a center O2 of the attracting surface 130a are aligned, the diameter D1 of the iron piece 120 is set relative to the diameter D2 of the attracting surface 130a such that an outer edge of the attracting surface 130a is located within the surface to be attracted 120a of the iron piece 120. As a result, even when the switch body 102 and/or the actuator 104 are/is relatively displaced in an allowable manner, the switch body 102 can fix the actuator 104 with a predetermined attracting force.

In the closed state of the door PD, that is, when the sensor-side coil 152 detects the actuator communication unit 124, the safety-related output is output to, for example, a PLC that controls the apparatus installed in the operation region S (FIG. 2) when another condition is satisfied. An RFID detection circuit (not illustrated) related to the sensor-side coil 152 is mounted on the board extension Cb(1ex) of the first board Cb(1), and the electromagnet 130 is controlled based on a signal from the sensor-side coil (antenna coil) 152.

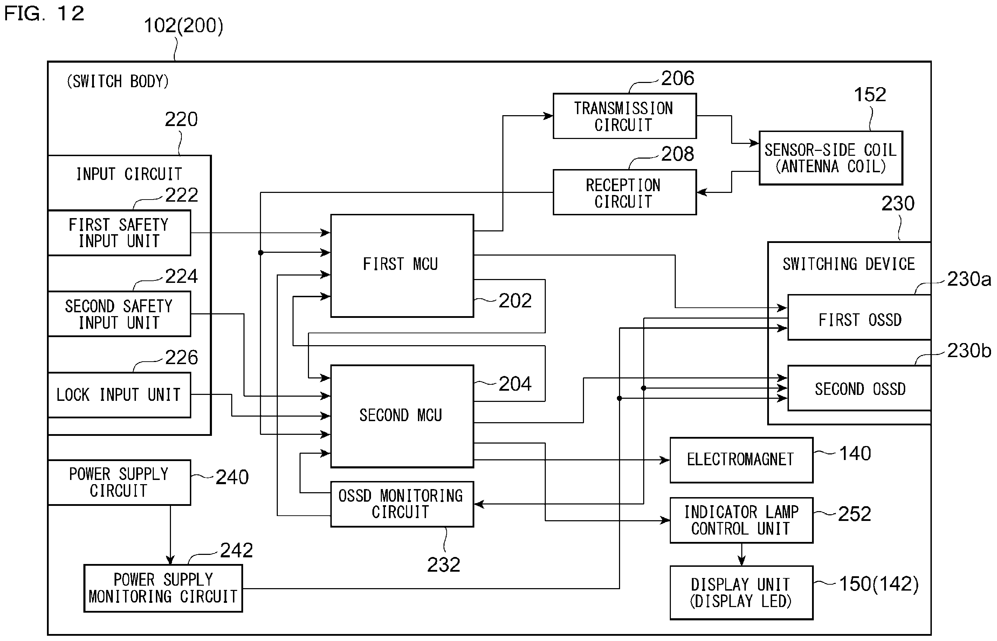

FIG. 12 is a block diagram for describing an electrical configuration of the switch body 102. The control circuit 200 of the switch body 102 includes a first MCU 202 and a second MCU 204. The first MCU 202 and the second MCU 204 communicate with each other to monitor the counterpart.

The first MCU 202 is connected to a transmission circuit 206. The transmission circuit 206 is connected to the sensor-side coil (antenna coil) 152. The sensor-side coil 152 is connected to a reception circuit 208. The reception circuit 208 is connected to both the first MCU 202 and the second MCU 204. The first MCU 202 drives the sensor-side coil 152 via the transmission circuit 206, and supplies a radio signal from the sensor-side coil 152 to the actuator communication unit 124. The actuator communication unit 124 includes at least a coil and a circuit, and is arranged such that the coil is located in a portion covered with the plastic molding 122 as illustrated in FIG. 4. The first MCU 202 and the second MCU 204 receive the radio signal from the actuator communication unit 124 via the sensor-side coil 152 and the reception circuit 208. The RFID 152 includes the sensor-side coil 152 and a response circuit. The actuator communication unit 124 may be a radio tag (RF-ID tag). The response circuit operates using an induced current generated in the sensor-side coil 152 as a power supply. The response circuit demodulates the radio signal received by the sensor-side coil 152 to acquire information, and further transmits a radio signal (response signal) via the sensor-side coil 152.

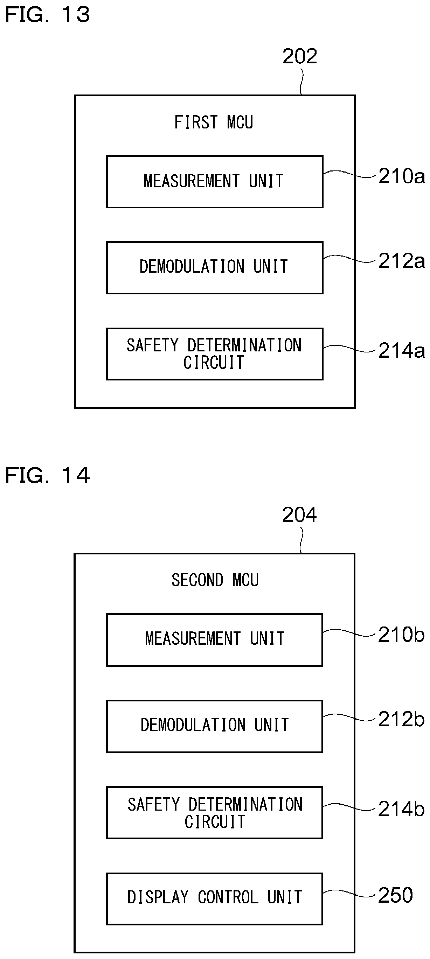

Referring to FIGS. 13 and 14, each of a measurement unit 210a of the first MCU 202 and a measurement unit 210b of the second MCU 204 measures the intensity of the radio signal from the actuator communication unit 124 received via the sensor-side coil 152 and the reception circuit 208, and estimate a distance d between the switch body 102 and the actuator 104 based on the intensity of the radio signal. Each of a safety determination circuit 214a of the first MCU 202 and a safety determination circuit 214b of the second MCU 204 determines that the estimated distance d is equal to or smaller than a threshold, that is, whether or not the actuator 104 is within a predetermined range with respect to the switch body 102. In other words, the detection unit that detects that the actuator 104 is within the predetermined range with respect to the switch body 102 is realized by at least the sensor-side coil 152, the reception circuit 208, and the first MCU 202 or the second MCU 204. Note that, instead of the distance d, the intensity of the radio signal may be used as it is to detect a position of the actuator 104. A demodulation unit 212a of the first MCU 202 and a demodulation unit 212b of the second MCU 204 demodulate information conveyed by radio signals from the actuator communication unit 124 received via the sensor-side coil 152 and the reception circuit 208, respectively, and identify the actuator 104 based on the information. This information may include unique identification information.

The safety determination circuit 214a of the first MCU 202 determines whether or not two conditions are satisfied based on the measurement by the measurement unit 210a and the identification by the demodulation unit 212a, that is, a condition that the estimated distance d is equal to or smaller than the threshold and a condition that the actuator 104 is identified as a predetermined actuator, and transmits a determination result to the second MCU 204. More specifically, there are two types of determination results, that is, a result that both the conditions are satisfied and a result that at least one of the conditions is not satisfied. Similarly, the safety determination circuit 214b of the second MCU 204 determines whether or not two conditions are satisfied based on the measurement by the measurement unit 210b and the identification by the demodulation unit 212b, that is, a condition that the estimated distance d is equal to or smaller than the threshold and a condition that the actuator 104 is identified as the predetermined actuator, and transmits a determination result to the first MCU 202. The safety determination circuit 214a of the first MCU 202 outputs a safety-related output determining that the actuator 104 identified as the predetermined actuator is in the predetermined range with respect to the switch body 102, that is, the door PD is in the closed state when the self-determination result matches the determination result of the second MCU. Similarly, the safety determination circuit 214b of the second MCU 204 determines that the actuator 104 identified as the predetermined actuator is in the predetermined range with respect to the switch body 102, that is, the door PD is in the closed state when the self-determination result matches the determination result of the first MCU. Note that the first MCU 202 and the second MCU 204 output the safety-related output via an output signal switching device (OSSD) when a condition related to a signal input via an input circuit 220 is also satisfied as will be described later in the present embodiment, but the safety-related output may be output based on the radio signal received via the reception circuit 208 and the mutual determination results of the first MCU 202 and the second MCU 204. Further, the estimation of the distance d between the switch body 102 and the actuator 104 and the identification of the actuator 104 are performed based on the radio signal detected by the sensor-side coil 152 in the present embodiment, but it may be configured such that only the estimation of the distance d is performed, and the safety determination circuit 214a or 214b outputs the determination result as to whether the distance d is equal to or smaller than the threshold to the other safety determination circuit without performing the determination related to the identification of the actuator 104.

Returning to FIG. 12, the input circuit 220 includes a first safety input unit 222, a second safety input unit 224, and a lock input unit 226. Another device capable of outputting a safety-related output is connected to the first safety input unit 222 and the second safety input unit 224. That is, the first safety input unit 222 and the second safety input unit 224 are input circuits configured for a daisy chain connection between the switch body 102 and the other device. For example, in the first safety input unit 222 and the second safety input unit 224, one of terminals for outputting the safety-related output of the other device is connected to the first safety input unit 222, and the other terminal for outputting a safety-related output of the other device is connected to the second safety input unit 224.

The lock input unit 226 is connected to an external control device such as a safety PLC and a safety control device, receives a lock signal for controlling the lock mechanism output from the external control device, and outputs the input signal to the second MCU 204. The second MCU 204 determines whether or not the signal input via the lock input unit 226 is an ON signal. The second MCU 204 can drive the electromagnet 130 based on the lock signal input via the lock input unit 226 to attract the electromagnet 130 to the iron piece 120 of the actuator 104. That is, the door PD is locked by the magnetic force in accordance with the signal input via the lock input unit 226. Note that the second MCU 204 may drive the electromagnet 130 when the signal input via the lock input unit 226 is the ON signal, or may drive the electromagnet when it is determined that another condition is satisfied in addition to the condition that the signal input via the lock input unit 226 is the ON signal. For example, the above-described determination by the safety determination circuits 214a and 214b may be a condition for driving the electromagnet 130. In this case, the electromagnet 130 is driven when it is determined that the predetermined actuator 104 is in the state of being within the predetermined range with respect to the switch body 102, the reliability that the door PD maintains the closed state is improved by the lock signal output from the external control device.

The control circuit 200 includes a first OSSD 230a and a second OSSD 230b as a switching device 230. The first MCU 202 outputs the safety-related output via the first OSSD 230a, and the second MCU 204 outputs the safety-related output via the second OSSD 230b. Note that an external device to which the safety-related output is output via the first OSSD 230a and the second OSSD 230b and the external control device that outputs the lock signal input via the lock input unit 226 may be the same device or different devices, and both of them constitute the compartment system 1.

The first OSSD 230a and the second OSSD 230b are configured using, for example, PNP transistors. When the PNP transistor is turned on, a positive-side power supply is connected to an output terminal, and thus, an ON signal is output. On the other hand, when the PNP transistor is turned off, the output terminal is grounded via a pull-down resistor, and thus, an OFF signal is output.

An OSSD monitoring circuit 232 may be connected to each of the first OSSD 230a and the second OSSD 230b. The OSSD monitoring circuit 232 is connected to the first MCU 202 and the second MCU 204. The first MCU 202 monitors whether or not the second OSSD 230b normally operates through the OSSD monitoring circuit 232. The second MCU 204 monitors whether or not the first OSSD 230a normally operates through the OSSD monitoring circuit 232. For example, each of the first OSSD 230a and the second OSSD 230b periodically shifts the output signal to OFF for a minute time when outputting the ON signal. The OSSD monitoring circuit 232 determines that the OSSD is normal if OFF for the minute time can be detected during an output period of the ON signal, and determines that the OSSD is not normal if OFF for the minute time is not detectable.

Note that a case where OFF for the minute time is not detectable by the OSSD monitoring circuit 232 and the ON signal continues is caused by, for example, a short circuit between the output terminal and the positive-side power supply. In this case, the safety determination circuits 214a and 214b output control signals for outputting the OFF signals to the first OSSD 230a and the second OSSD 230b, respectively. As a result, a normally operating one of the first OSSD 230a and the second OSSD 230b outputs the OFF signal. Note that the shift of the safety-related output to OFF for monitoring the OSSD monitoring circuit 232 is set to such a minute time that the external device to which the safety-related output is output does not react to this OFF.

A power supply circuit 240 is a DC-DC converter that receives DC+24 V and 0 V from the outside and generates DC voltages such as DC +10 V, +5 V, and +3.3 V. The power supply circuit 240 supplies power to all circuits that require power, such as the control circuit 200, the sensor-side coil 152, and the display unit 142. Meanwhile, in a case where a voltage supplied from an external power supply or a voltage output from the power supply circuit 240 is not within a predetermined range, there is a possibility that the control circuit 200 or the like does operate normally. Therefore, the power supply monitoring circuit 242 determines whether or not the voltage supplied from the external power supply is within the predetermined range, determines whether the voltage output from the power supply circuit 240 is within the predetermined range, and outputs a determination result to the first OSSD 230a and the second OSSD 230b. When a determination result indicating that the power supply circuit 240 is not operating normally is input, each of the first OSSD 230a and the second OSSD 230b sets the safety-related output to OFF without depending on the control signal output from the control circuit 200. When a determination result indicating that the power supply circuit 240 is normally operating is input, each of the first OSSD 230a and the second OSSD 230b outputs the safety-related output depending on the control signal output from the control circuit 200.

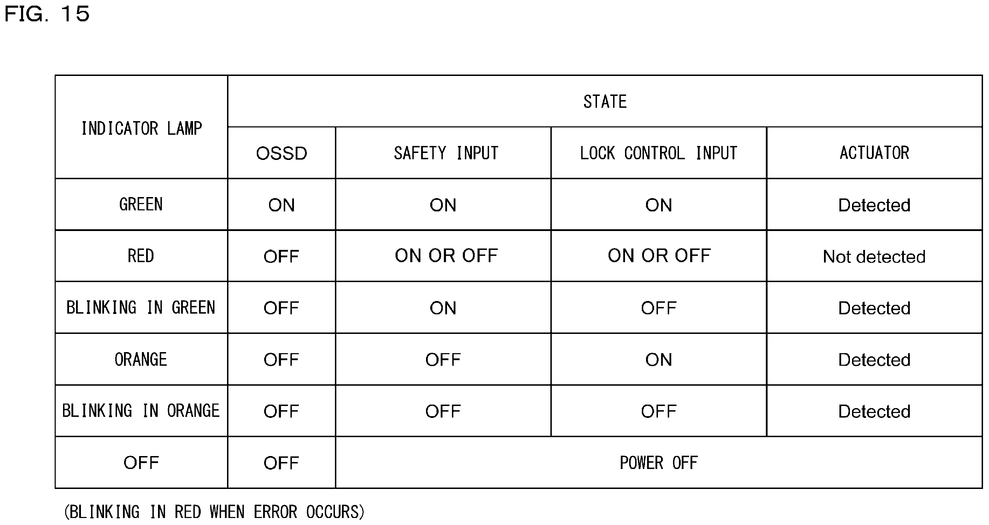

The control circuit 200 includes an indicator lamp control unit 252 that controls the display unit 142, and the indicator lamp control unit 252 of the second MCU 204 supplies the indicator lamp control unit 252 with at least a display state signal according to the safety-related output via the second OSSD 230b. A relationship between ON or OFF of the safety-related output and determination results in the first MCU 202 and the second MCU 204 will be described with reference to FIG. 15.

A column "Indicator lamp" in FIG. 15 indicates a light emission pattern of the display unit 142 controlled based on the display state signal supplied to the indicator lamp control unit 252. A column "State" is subdivided into "OSSD" and "Safety input", "Lock control input", and "Actuator". The column "OSSD" indicates whether the safety-related output, which is output to the external control device via the first OSSD 230a and the second OSSD 230b as the switching device 230, is ON or OFF. Further, the columns "Safety input", "Lock control input", and "Actuator" indicate determination items used when determining whether to set the safety-related output, which is output via the switching device 230, to ON or OFF. The column "Safety input" indicates whether the safety-related output, input via the first safety input unit 222 and the second safety input unit 224, is ON or OFF.

The column "Lock control input" indicates whether the lock signal input from the external control device via the lock input unit 226 is ON or OFF. The column "Actuator" indicates whether or not the actuator 104, which is identified as the predetermined actuator based on the radio signal received via the sensor-side coil 152 and the reception circuit 208, has been detected to be in the predetermined range with respect to the switch body 102.

As illustrated in FIG. 15, in the present embodiment, the safety-related output, which is output via the switching device 230, is set to ON when the safety-related output input via the first safety input unit 222 and the second safety input unit 224 is ON, the lock signal input via the lock input unit 226 is ON, and the actuator 104 has been detected. At this time, the light emission pattern of the display unit 142 is lighting in green. Further, when the actuator 104 is not detected, regardless of the safety-related output and the lock signal input via the first safety input unit 222 and the second safety input unit 224, the safety-related output, which is output via the switching device 230 set to OFF, and the light emission pattern of the display unit 142 is lighting in red. The safety switch 100 of the present embodiment detects whether the actuator 104 is within the predetermined range with respect to the switch body 102 in order to maintain the operation region S in the safe environment. When the actuator 104 is not detected, the door PD is not in the closed state, and the operation region S is not maintained as the safe environment. Thus, regardless of input states of other signals, the safety-related output, which is output via the switching device 230, is set to OFF.

In addition to the detection of the actuator 104, the safety switch 100 of the present embodiment refers to input states of various signals and determines whether to set the safety-related output, which is output via the switching device 230, to ON or OFF. At this time, as compared with the detection by the actuator 104, it is difficult for the worker to grasp which state the safety-related output or the lock signal input via the first safety input unit 222 and the second safety input unit 224 is in. More specifically, whether or not the actuator 104 is detected has a certain correlation with whether or not the door PD is in the closed state. Thus, in a case where the actuator 104 is not detected and the safety-related output, which is output from the switch body 102 via the switching device 230, is set to OFF, the worker can easily specify the cause thereof. On the other hand, regarding the safety-related output or the lock signal input via the first safety input unit 222 and the second safety input unit 224, the worker can confirm whether or not the cable corresponding thereto is connected and the like by appearance, but hardly grasps any state of the signal supplied via such a cable by appearance. Thus, in the present embodiment, when the safety-related output that is output via the switching device 230 is OFF due to input states of various signals, the light emission pattern of the display unit 142 is changed according to the input states of the various signals in the present embodiment such that the worker can easily specify the reason why the safety-related output, which is output from the switch body 102 via the switching device 230, is OFF.

Note that, in the present embodiment, the safety-related output that is output from the switch body 102 and the light emission pattern of the display unit 142 are changed according to the column "Safety input" in FIG. 15 since the other device capable of outputting the safety-related output is connected to the first safety input unit 222 and the second safety input unit 224. However, in a case where the other device is not connected, the safety-related output that is output from the switch body 102 and the light emission pattern of the display unit 142 may be determined according to the column "Lock control input" and the column "Actuator". In this case, when the column "Lock control input" is "ON" and the column "Actuator" is "Detected", the safety-related output that is output by the switch body 102 is set to ON, and the light emission pattern of the display unit 142 is lighting in green. Further, in this case, there is no case where the light emission pattern of the display unit 142 is "orange" or "blinking in orange" as illustrated in FIG. 15.

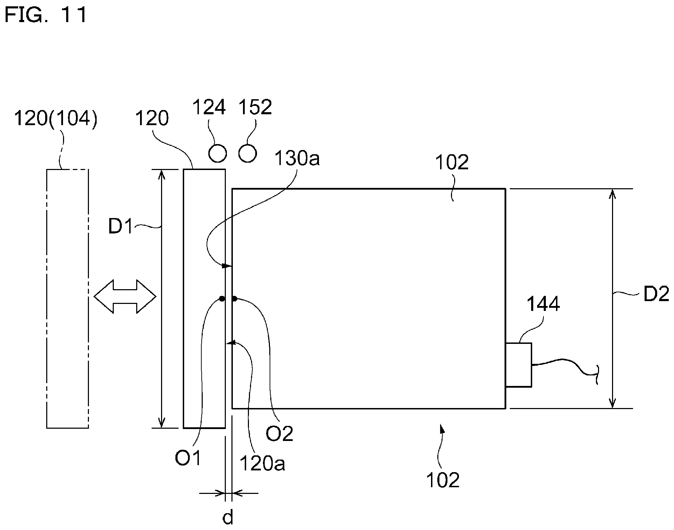

As described above, the distance d (FIG. 11) from the switch body 102 to the actuator 104 is estimated based on the intensity of the radio signal. When the distance d is within the predetermined range, an ID is acquired from the actuator communication unit 124, it is confirmed that the acquired ID matches a recorded ID, and then, it is determined whether or not the electromagnet 130 and the iron piece 120 are in close contact with each other.

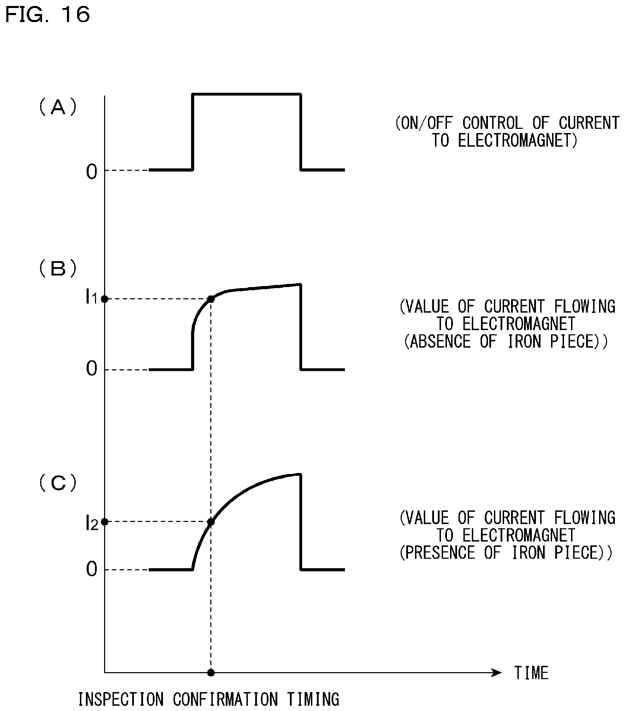

The determination as to whether or not a distance d2 is equal to or smaller than a threshold will be specifically described with reference to FIG. 16. The second MCU 204 supplies an inspection current to the electromagnet 130, and monitors a current flowing through the electromagnet 130 at this time. In FIG. 16, (I) illustrates a rectangular wave of the inspection current. A value of the inspection current is smaller than a value of a lock current supplied to the electromagnet 130 to maintain the closed state of the door PD, that is, to form a locked state of the safety switch 100. If a current having the same value as the value of the lock current is adopted for inspection, even if the lock signal is not ON, the electromagnet 130 attracts the iron piece 120 with an attracting force enough to maintain the door PD in the closed state, and thus, an operation of opening the door PD is hindered, and the workability of the worker is deteriorated. In this regard, when the value of the inspection current is set to a value smaller than the value of the lock current, particularly to a weak value to such an extent that the electromagnet 130 hardly exhibits the attracting force, the workability of the worker can be maintained.

In FIG. 16, (II) illustrates a monitoring current flowing to the electromagnet 130 to correspond to the inspection current of the rectangular wave in (I) of FIG. 16 in a state in which the electromagnet 130 and the iron piece 120 are not in close contact with each other, that is, a state in which the distance d2 between the attracting surface 130a and the surface to be attracted 120a is larger than a threshold. In FIG. 16, (III) illustrates a monitoring current flowing to the electromagnet 130 to correspond to the inspection current of the rectangular wave in (I) of FIG. 16 in a state in which the electromagnet 130 and the iron piece 120 are in close contact with each other, that is, a state in which the distance d2 between the attracting surface 130a and the surface to be attracted 120a is equal to or smaller than the threshold. As can be seen from comparison between (II) and (III) in FIG. 16, in the state in which the electromagnet 130 and the iron piece 120 are in close contact with each other, that is, the state in which the distance d2 between the attracting surface 130a and the surface to be attracted 120a is equal to or smaller than the threshold, an inductance is higher than that in the state in which the distance d2 is larger than the threshold. Thus, the period of time from a time point at which the supply of the inspection current has been started to a time point at which a value of the monitoring current reaches a certain value increases.

When there is a difference in the period of time until the value of the monitoring current reaches a certain value from the time point when the supply of the inspection current has been started, there is a difference in a value of a current flowing through the electromagnet 130 at a timing when a certain period of time has elapsed since the start of supply of the inspection current. For the comparison between (II) and (III) in FIG. 16, the timing when a certain period of time has elapsed since the start of supply of the inspection current to the electromagnet 130 is illustrated as an inspection confirmation timing. A value of a current at the inspection confirmation timing of the monitoring current flowing through the electromagnet 130 in the state in which the distance d2 between the attracting surface 130a and the surface to be attracted 120a is larger than the threshold is a first monitoring current value I1 illustrated in (II) of FIG. 16. Further, a value of a current at the inspection confirmation timing of the monitoring current flowing through the electromagnet 130 in the state in which the distance d2 between the attracting surface 130a and the surface to be attracted 120a is equal to or smaller than the threshold is a second monitoring current value I2 illustrated in (III) of FIG. 16. When comparing the first monitoring current value I1 and the second monitoring current value I2, the first monitoring current value I1 is larger. That is, the monitoring current ((II) in FIG. 16) reaching the certain value for a shorter period of time since the time point when the inspection current has been supplied, in other words, the monitoring current having higher responsiveness has a larger current value at the inspection confirmation timing than the monitoring current ((III) in FIG. 16) having lower responsiveness. Therefore, by comparing values of the monitoring current at the inspection confirmation timing, it is possible to discern whether the responsiveness of the monitoring current flowing through the electromagnet 130 is high or low, whether the inductance associated with the level of the responsiveness is high or low, and whether the distance d2 between the attracting surface 130a and the surface to be attracted 120a associated with the magnitude of the inductance is long or short. More specifically, a threshold value of a current value is set at least between the first monitoring current value I1 and the second monitoring current value I2 such that the magnitude relationship between the distance d2 and the threshold can be discerned, and it is determined whether the distance d2 is larger than the threshold or equal to or smaller than the threshold depending on whether the current value of the monitoring current at the inspection confirmation timing is larger than the threshold value or equal to or smaller than the threshold value.

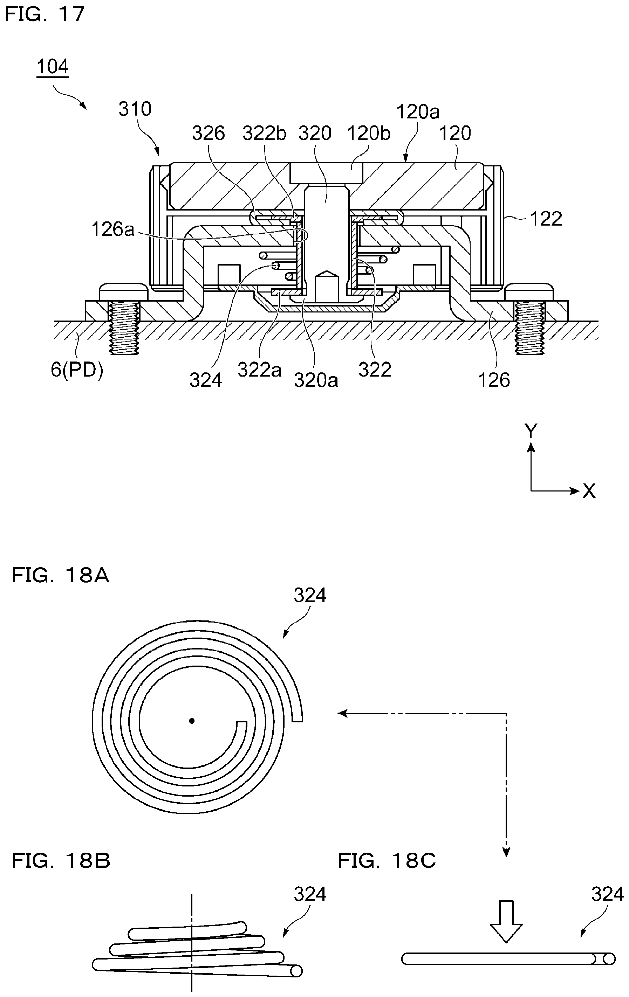

FIG. 17 is a longitudinal cross-sectional view of the actuator 104. FIG. 17 illustrates the actuator 104 attached to the door PD in which the door frame 6 is attached so as to be parallel to the door opening frame 2 to which the switch body 102 is attached in the mode of FIG. 2. Thus, a normal direction of the door frame 6 (PD) coincides with the Y-axis direction as a normal direction of the attracting surface 130a of the electromagnet 139 included in the switch body 102. Furthermore, the actuator 104 in FIG. 19 is in a state in which a normal direction of the surface to be attracted 120a of the iron piece 120 included in the actuator 104 coincides with the Y-axis direction.

Referring to FIG. 17, the attachment fitting 126 described above forms a base member of the actuator 104. The attachment fitting 126 has a U-shaped cross-sectional shape having flanges at both ends, and includes a through hole 126a at the center of a planar top portion. The actuator 104 includes a movable pin 320 inserted into the through hole 126a of the attachment fitting 126, and one end portion of the movable pin 320 is fixed to the iron piece 120. The iron piece 120 includes a permanent magnet 120b having a circular shape in a front view at a center portion of the surface to be attracted 120a. The movable pin 320 inserted into the through hole 126a of the attachment fitting 126 is movable relative to the attachment fitting 126 in an axial direction of the movable pin 320. With this configuration, a movement mechanism that relatively moves the surface to be attracted 120a with respect to the attachment fitting 126 is configured.

The movable pin 320 includes a pin head 320a located at an end on the attachment fitting 126 side. The movable pin 320 is inserted into a sleeve 322. The sleeve 322 has a length in the axial direction of the movable pin 320, and has a first-end flange 322a and a second-end flange 322b which extend radially outward and circumferentially. The first-end flange 322a and the second-end flange 322b of the sleeve 322 are used to set a constant position of the iron piece 120 with respect to the movable pin 320, and the iron piece 120, the movable pin 320, and the sleeve 322 move with respect to the attachment fitting 126.

The movable pin 320 and the sleeve 322 are movable in the axial direction of the movable pin 320 as an outer circumferential surface of the sleeve 322 is guided to the through hole 126a. The sleeve 322 has a guide function of guiding the movement of the movable pin 320 in the axial direction. The movable pin 320 is also swingable inside the through hole 126a together with the sleeve 322. That is, a diameter of the sleeve 322 is smaller than a diameter of the through hole 126a, and the sleeve 322 is loosely fitted into the through hole 126a. With this configuration, a swing mechanism for swinging the surface to be attracted 120a is configured.

A compression coil spring 324 is provided between the first-end flange 322a of the sleeve 322 and the attachment fitting 126. The compression coil spring 324 constitutes a biasing unit that biases the movable pin 320 and the surface to be attracted 120a in a direction approaching the door frame 6, that is, in a retracting direction.

In FIG. 18, (I) is a plan view of the compression coil spring 324. In FIG. 18, (II) is a side view of the compression coil spring 324 in an unloaded state. In FIG. 18, (III) is a side view of the compression coil spring 324 in a state of being compressed as a load is applied. As can be seen from (I) of FIG. 18, the compression coil spring 324 is configured using a spiral spring having a trapezoidal shape in the side view with a diameter gradually reduced in an axial direction.

The compression coil spring 324 having a spiral shape can have a flat shape in the side view in the compressed state. Thus, a moving range when the movable pin 320 moves is expanded in a direction in which the compression coil spring 324 is compressed.

In the present embodiment, the state of the actuator 104 illustrated in FIG. 17, that is, a state in which the iron piece 120 has been moved in the direction approaching the door frame 6, in other words, in a direction away from the electromagnet 130 by the compression coil spring 324 is defined as a standby state, and a position of the iron piece 120 in this state is defined as a standby position. Note that modifications of the compression coil spring 324 can include an elastic body such as a disc spring or rubber.

A cushion member 326 is disposed between the second-end flange 322b of the sleeve 322 and the attachment fitting 126 and the iron piece 120 (FIG. 17). As will be described later, an impact when the iron piece 120 overlaps the attracting surface 130a of the electromagnet 130 based on an attractive force of the permanent magnet 120b is alleviated by the compression coil spring 324 and the cushion member 326.

FIG. 19 is a view for describing an action of the actuator 104. In FIG. 19, (I) illustrates the actuator 104 in the standby state, and corresponds to FIG. 17. Note that the actuator communication unit 124 in FIG. 19 indicates a position of an actuator coil included in the actuator communication unit 124.

In FIG. 19, (II) illustrates a state in which the actuator 104 has approached the attracting surface 130a of the electromagnet 130 included in the switch body 102 as the door PD is closed in a process in which the door PD is changed from an open state to the closed state, that is, in a process in which the worker closes the door PD. At this time, the electromagnet 130 is not driven. As illustrated in (II) of FIG. 19, when the actuator 104 approaches the electromagnet 130, the attractive force by the permanent magnet 120b included in the actuator 104 acts on the attracting surface 130a of the electromagnet 130. When the attractive force becomes larger than a spring force of the compression coil spring 324, the compression coil spring 324 starts to be compressed. Then, under the attractive force of the permanent magnet 120b, the movable pin 320 and the iron piece 120 move together with the plastic molding 122 in the direction away from the door frame 6, that is, in the direction approaching the attracting surface 130a. Therefore, for example, when the door PD is closed and the distance between the actuator 104 and the switch body 102 falls within a certain range, the movable pin 320 and the iron piece 120 move together with the plastic molding 122 in the direction approaching the attracting surface 130a along the Y-axis direction. According to this configuration, a relative position of the surface to be attracted 120a with respect to the attachment fitting 126 is offset toward the attracting surface 130a side when the actuator 104 is out of the predetermined range with respect to the switch body 102 as compared with that at the time when the actuator 104 is within the predetermined range with respect to the switch body 102. Thus, a close contact state between the surface to be attracted 120a and the attracting surface 130a is easily realized. Further, according to this configuration, the actuator communication unit 124 is offset toward the attracting surface 130a side together with the surface to be attracted 120a relative to the attachment fitting 126. That is, a distance between the actuator communication unit 124 and the sensor-side coil 152 when the attracting surface 130a and the surface to be attracted 120a come into contact with each other becomes constant regardless of a position of the surface to be attracted 120a in the actuator 104. Thus, it is possible to determine whether or not the actuator 104 is within the predetermined range with respect to the switch body without setting the threshold to be compared with the distance d according to the position of the surface to be attracted 120a in the actuator 104.

In FIG. 19, (III) illustrates a state in which the surface to be attracted 120a and the attracting surface 130a are brought into close contact with each other by the attractive force of the permanent magnet 120b through the process of (II) described above. The threshold for the distance d is set such that the distance d estimated based on the intensity of the radio signal received from the actuator communication unit 124 via the sensor-side coil 152 in this state is equal to or smaller than the threshold, that is, such that the actuator communication unit 124 determines that the actuator 104 is within the predetermined range with respect to the switch body 102 in this state. Further, in the state of (III) of FIG. 19, the second MCU 204 supplies a detection current to the electromagnet 130 and monitors a current flowing through the electromagnet 130, thereby determining whether or not the surface to be attracted 120a and the attracting surface 130a are in close contact with each other. When it is determined that the surface to be attracted 120a and the attracting surface 130a are in close contact with each other, the second MCU 204 drives the electromagnet 130 to attract the iron piece 120 to maintain the closed state of the door PD. Note that, in the present embodiment, the iron piece 120 moves to the attracting surface 130a side by the attractive force of the permanent magnet 120b included in the actuator 104 so that the attracting surface 130a and the surface to be attracted 120a are brought into close contact with each other in the closed state of the door PD. However, the movement of the iron piece 120 to the attracting surface 130a side may be realized by another unit. For example, it may be configured such that the iron piece 120 moves to the attracting surface 130a side by inertia when the door PD is set to the closed state, that is, when the door PD is closed. Further, the electromagnet 130 may be configured such that the electromagnet 130 is driven to generate an attracting force weaker than an attracting force for maintaining the closed state of the door PD, and the iron piece 120 moves to the attracting surface 130a side by the attractive force.

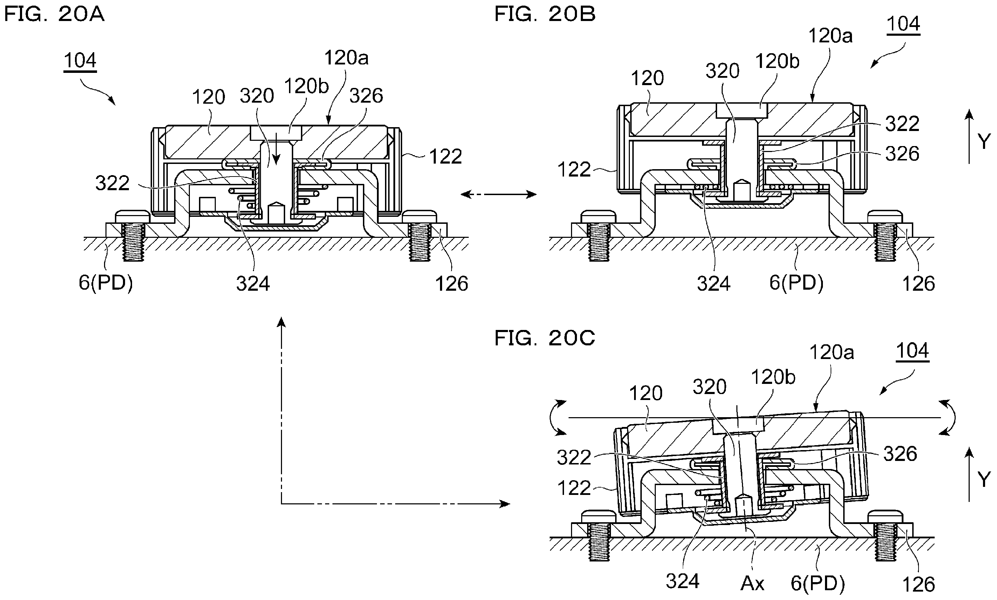

FIG. 20 is a cross-sectional view for describing a state change of the actuator 104. In FIG. 20, (I) corresponds to (I) of FIG. 19, and the actuator 104 is in the standby state. In FIG. 20, (II) illustrates a state in which the iron piece 120 of the actuator 104 has advanced to the maximum to be set at a maximum action position, that is, a state in which the movable pin 320 is set at a maximum stroke position displaced in the axial direction, that is, the Y-axis direction. This state can be created by the attractive force of the permanent magnet 120b. In FIG. 20, (III) is a view for describing that the iron piece 120 is swingable to obtain a state in which the surface to be attracted 120a is parallel to the attracting surface 130a when the iron piece 120 and the attracting surface 130a overlaps each other under the attractive force of the permanent magnet 120b. The parallel state between the surface to be attracted 120a and the attracting surface 130a is established by swinging, that is, a tilting motion of an axial line Ax of the movable pin 320.

As described above, the actuator communication unit 124 is disposed in the plastic molding 122 surrounding the periphery of the iron piece 120 is disposed with (FIG. 3). On the other hand, the sensor-side coil 152 is disposed in the switch body 102 (FIG. 9). It is determined whether the actuator 104 is within the predetermined range with respect to the switch body 102, that is, whether or not the distance d is equal to or smaller than the threshold based on the intensity of the radio signal received from the actuator communication unit 124 via the sensor-side coil 152.

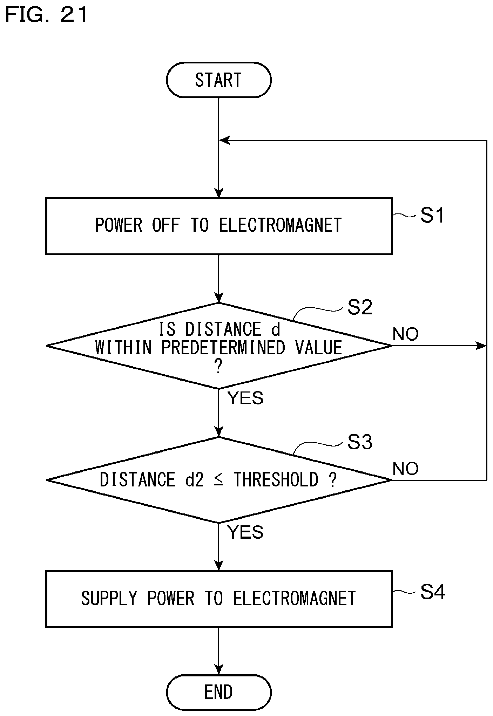

FIG. 21 is a flowchart for describing power supply control of the electromagnet 130 by the second MCU 204 in a process of closing the door PD. When the door PD is open, the electromagnet 130 is not supplied with power (S1). In a process in which the door PD is set to the closed state, that is, closed, the actuator 104 approaches the switch body 102. In Step S2, whether or not the distance d between the surface to be attracted 120a and the attracting surface 130a is within a predetermined value is determined between the actuator communication unit 124 and the sensor-side coil 152. When it is determined in Step S2 that the distance d is within the predetermined value, the flow proceeds to Step S3 to determine whether or not the distance d2 is equal to or smaller than the threshold. When it is determined in Step S3 that the distance d2 is equal to or smaller than the threshold, the flow proceeds to Step S4. In Step S4, power is supplied to the electromagnet 130 on a condition that another condition is satisfied. When the electromagnet 130 is driven, the actuator 104 is attracted to the electromagnet 130 by an electromagnetic force of the electromagnet 130, and the door PD is set to an electromagnetically locked state. Note that, in the present embodiment, control is performed such that power is not supplied to the electromagnet 130 in Step S1, and control is performed such that power is supplied to the electromagnet 130 in Step S4. However, any configuration may be adopted in which the electromagnet 130 is controlled so as to generate an attracting force sufficient to maintain the door PD in the closed state according to a determination result in Step S3. For example, the electromagnet 130 may be driven so as to generate an attracting force smaller than the attracting force sufficient to maintain the door PD in the closed state in Step S1, and control may be performed to increase the attracting force to an extent sufficient to maintain the door PD in the closed state in Step S4.

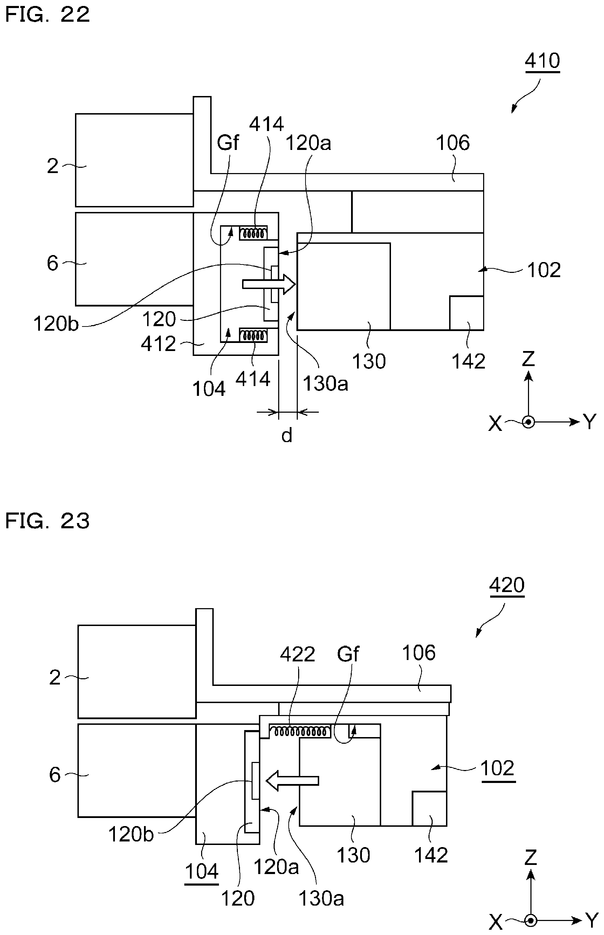

Although the safety switch 100 of the embodiment and a system including the same have been described above, the invention is not limited thereto, and includes, for example, modifications to be described as follows. The modifications will be described with reference to FIGS. 22 to 25.

In a first modification 410 illustrated in FIG. 22, the actuator 104 is fixed to the door frame 6 with a mounting tool 412. The mounting tool 412 has a guide surface Gf that guides the actuator 104 in advancing and retracting directions, that is, the Y-axis direction, and the actuator 104 is guided by the guide surface Gf inside the mounting tool 412, is displaceable in the Y-axis direction, and can move forward to approach the attracting surface 130a of the electromagnet 130. The actuator 104 is biased in a retracting direction away from the electromagnet 130 by an elastic body 414 such as a coil spring. In a power-off state of the electromagnet 130, the actuator 104 moves forward in the Y-axis direction against a biasing force of the elastic body 414 by the attractive force of the permanent magnet 120b located at a center portion of the iron piece 120, and then, a state in which the surface to be attracted 120a and the attracting surface 130a are in a close contact with each other is formed under the attractive force of the permanent magnet 120b.

FIG. 23 illustrates a second modification 420. In the second modification 420, only the electromagnet 130 included in the switch body 102 can move forward to approach the permanent magnet 120b of the actuator 104 in the Y-axis direction by the guide surface Gf. The electromagnet 130 is biased in the retracting direction by an elastic body 422 such as a coil spring. In the power-off state of the electromagnet 130, the electromagnet 130 moves forward in the Y-axis direction against a biasing force of the elastic body 422 by the attractive force of the permanent magnet 120b, and then, a state in which the surface to be attracted 120a and the attracting surface 130a are in close contact with each other is formed under the attractive force of the permanent magnet 120b.

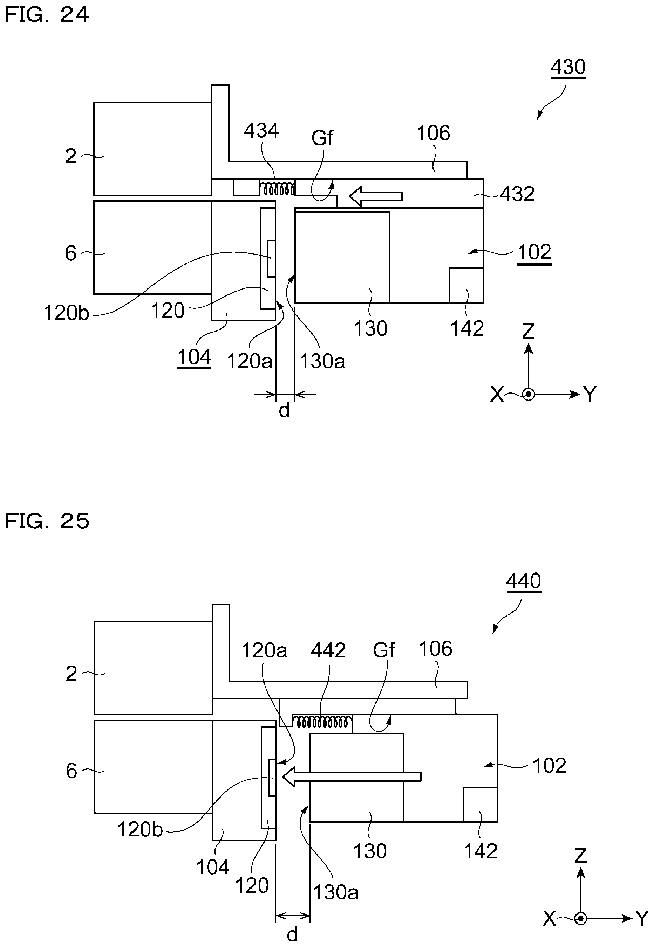

FIG. 24 illustrates a third modification 430. In the third modification 430, a movable member 432 and an elastic body 434 such as a coil spring are disposed between the switch body 102 and the first bracket 106. The movable member 432 is displaceable in the Y-axis direction by the guide surface Gf. The switch body 102 is fixed to the movable member 432. When the movable member 432 is displaced in the Y-axis direction, the switch body 102 moves in the Y-axis direction together with the displacement, and can move forward to approach the iron piece 120 of the actuator 104. The movable member 432 is biased in the retracting direction by an elastic body 434 such as a coil spring. In the power-off state of the electromagnet 130, the electromagnet 130 moves forward together with the movable member 432 against a biasing force of the elastic body 434 by the attractive force of the permanent magnet 120b of the iron piece 120, and then, a state in which the surface to be attracted 120a and the attracting surface 130a are in close contact with each other is formed under the attractive force of the permanent magnet 120b.

In a fourth modification 440 illustrated in FIG. 25, the switch body 102 is movable relative to the first bracket 106. The switch body 102 is guided by the guide surface Gf and is displaceable in the Y-axis direction. Then, in the switch body 102, the switch body 102 is biased in the retracting direction by an elastic body 442 such as a coil spring. In the power-off state of the electromagnet 130, the electromagnet 130 moves forward together with the movable member 432 against a biasing force of the elastic body 442 by the attractive force of the permanent magnet 120b of the iron piece 120, and then, a state in which the surface to be attracted 120a and the attracting surface 130a are in close contact with each other is formed under the attractive force of the permanent magnet 120b.

Furthermore, in each of the first modification to the fourth modification described above, an object moving in the Y-axis direction may be swingably held. For example, in the first modification 410, the actuator 104 that moves relative to the mounting tool 412 may be swingably held with respect to the mounting tool 412.

Although only any one of the switch body 102, the actuator 104, and members holding the switch body 102 and the actuator 104 included in the safety switch 100 is held so as to be movable in the Y-axis direction in the above-described embodiment and the first modification to the fourth modification, but the invention is not limited thereto. For example, the iron piece 120 may be movably held in the actuator 104 as in the above embodiment, and the electromagnet 130 may be movably held as in the second modification.
This disclosure includes a first aspect that is a safety switch comprising: a switch body arranged in a compartment fixed portion of a compartment system that comparts an operation region in which an apparatus operates; and an actuator installed in a movable portion movable relative to the compartment fixed portion, the safety switch detecting that the actuator is within a predetermined range with respect to the switch body, wherein the actuator includes: a member to be magnetized on which a surface to be attracted, which corresponds to an attracting surface formed on an electromagnet provided in the switch body, is formed; an actuator attachment portion configured to attach the actuator to the movable portion; and a movement mechanism which supports the member to be movable relative to the actuator attachment portion to set a relative position of the surface to be attracted of the member with respect to the actuator attachment portion at a position offset toward the attracting surface of the switch body when the actuator is in the predetermined range with respect to the switch body as compared with a position when the actuator is not in the predetermined range with respect to the switch body.
A second aspect is the safety switch of the first aspect, wherein the actuator includes an actuator coil corresponding to a detection unit that is provided in the switch body and detects that the actuator is within the predetermined range with respect to the switch body, and the movement mechanism supports the member and the actuator coil to be movable relative to the actuator attachment portion to allow a relative position of the actuator coil with respect to the actuator attachment portion to move together with the relative position of the surface to be attracted with respect to the actuator attachment portion.
A third aspect is the safety switch of the first aspect, wherein the actuator includes a permanent magnet, and the member to be magnetized moves to a position where the relative position of the surface to be attracted is offset toward the attracting surface by an attractive force of the permanent magnet.
A fourth aspect is the safety switch of the third aspect, wherein the permanent magnet is arranged in a center portion of the surface to be attracted.
A fifth aspect is the safety switch of the third aspect, wherein the electromagnet attracts the member to be magnetized after the attracting surface and the surface to be attracted are brought into contact with each other.
A sixth aspect is the safety switch of the first aspect, wherein the member to be magnetized moves to a position where the relative position of the surface to be attracted is offset toward the attracting surface by a first attracting force of the electromagnet, and the electromagnet attracts the member with a second attracting force stronger than the first attracting force after the surface to be attracted and the attracting surface come into contact with each other.
A seventh aspect is the safety switch of the first aspect, wherein the actuator includes a swing mechanism that supports the member to be magnetized to be swingable relative to the actuator attachment portion, and the swing mechanism aligns an orientation of the surface to be attracted with an orientation of the attracting surface when the surface to be attracted is caused to overlap the attracting surface.
An eighth aspect is the safety switch of the first aspect, wherein the movement mechanism includes a guide portion that guides the member to be magnetized to move toward the electromagnet.
A ninth aspect is the safety switch of the first aspect, wherein the movement mechanism includes: a through hole provided in the actuator attachment portion; and a movable pin that has one end to which the member to be magnetized is fixed, is inserted into the through hole, and is movable in an axial direction relative to the through hole.
A tenth aspect is the safety switch of the first aspect, wherein the movement mechanism includes: a through hole provided in the actuator attachment portion; a movable pin that has one end to which the member to be magnetized is fixed, is inserted into the through hole, and is movable in an axial direction relative to the through hole; and a sleeve into which the movable pin is inserted, the sleeve moving with movement of the movable pin, and movement of the member toward the electromagnet is guided by the through hole and the sleeve.
An eleventh aspect is the safety switch of the first aspect, wherein the movement mechanism includes: a through hole provided in the actuator attachment portion; a movable pin that has one end to which the member to be magnetized is fixed, is inserted into the through hole, and is movable in an axial direction relative to the through hole; and a sleeve into which the movable pin is inserted, the sleeve being loosely fitted into the through hole and moving with movement of the movable pin, and the movable pin is supported to be swingable relative to the actuator attachment portion.
A twelvth aspect is the safety switch of the first aspect, wherein the actuator further includes a biasing member that biases the member to be magnetized in a retracting direction.
A thirteenth aspect is the safety switch of the twelfth aspect, wherein the sleeve has a first-end flange extending in a radial direction, and the biasing member is arranged between the first-end flange and the actuator attachment portion.
A fourteenth aspect is the safety switch of the thirteenth aspect, wherein the sleeve has a second-end flange on a side opposite to the first-end flange, and a cushion member is arranged between the second-end flange and the actuator attachment portion.
A fifteenth aspect is the safety switch of the twelfth aspect, wherein the biasing member is a compression coil spring.
A sixteenth aspect is the safety switch of the fifteenth aspect, wherein the compression coil spring is formed with a spiral spring having a trapezoidal shape in a side view and having a diameter gradually reduced in an axial direction, and the compression coil spring having a flat shape in the side view in a compressed state.
A seventeenth aspect is a safety switch comprising: a switch body arranged in a compartment fixed portion of a compartment system that comparts an operation region in which an apparatus operates; an actuator installed in a movable portion movable relative to the compartment fixed portion; an electromagnet that is provided on the switch body and has an attracting surface; a member to be magnetized that is provided on the actuator, is attracted by the electromagnet, and has a surface to be attracted which comes into contact with the attracting surface; and a movement mechanism that moves at least one of the attracting surface or the surface to be attracted toward another, the safety switch detecting that the actuator is within a predetermined range with respect to the switch body,
An eighteenth aspect is the safety switch of the seventeenth aspect, wherein the electromagnet attracts the member to be magnetized with a certain attracting force or more after the attracting surface and the surface to be attracted are brought into contact with each other by the movement mechanism.

## Claims

1. A safety switch comprising:
a switch body arranged in a compartment fixed portion of a compartment system that comparts an operation region in which an apparatus operates; and
an actuator installed in a movable portion movable relative to the compartment fixed portion, the safety switch detecting that the actuator is within a predetermined range with respect to the switch body,
wherein the actuator includes:
a member to be magnetized on which a surface to be attracted, which corresponds to an attracting surface formed on an electromagnet provided in the switch body, is formed;
an actuator attachment portion configured to attach the actuator to the movable portion; and
a movement mechanism which supports the member to be movable relative to the actuator attachment portion to set a relative position of the surface to be attracted of the member with respect to the actuator attachment portion at a position offset toward the attracting surface of the switch body when the actuator is in the predetermined range with respect to the switch body as compared with a position when the actuator is not in the predetermined range with respect to the switch body.

2. The safety switch according to claim 1, wherein
the actuator includes an actuator coil corresponding to a detection unit that is provided in the switch body and detects that the actuator is within the predetermined range with respect to the switch body, and
the movement mechanism supports the member and the actuator coil to be movable relative to the actuator attachment portion to allow a relative position of the actuator coil with respect to the actuator attachment portion to move together with the relative position of the surface to be attracted with respect to the actuator attachment portion.

3. The safety switch according to claim 1, wherein
the actuator includes a permanent magnet, and
the member to be magnetized moves to a position where the relative position of the surface to be attracted is offset toward the attracting surface by an attractive force of the permanent magnet.

4. The safety switch according to claim 3, wherein the permanent magnet is arranged in a center portion of the surface to be attracted.

5. The safety switch according to claim 3, wherein the electromagnet attracts the member to be magnetized after the attracting surface and the surface to be attracted are brought into contact with each other.

6. The safety switch according to claim 1, wherein
the member to be magnetized moves to a position where the relative position of the surface to be attracted is offset toward the attracting surface by a first attracting force of the electromagnet, and
the electromagnet attracts the member with a second attracting force stronger than the first attracting force after the surface to be attracted and the attracting surface come into contact with each other.

7. The safety switch according to claim 1, wherein
the actuator includes a swing mechanism that supports the member to be magnetized to be swingable relative to the actuator attachment portion, and
the swing mechanism aligns an orientation of the surface to be attracted with an orientation of the attracting surface when the surface to be attracted is caused to overlap the attracting surface.

8. The safety switch according to claim 1, wherein the movement mechanism includes a guide portion that guides the member to be magnetized to move toward the electromagnet.

9. The safety switch according to claim 1, wherein
the movement mechanism includes:
a through hole provided in the actuator attachment portion; and
a movable pin that has one end to which the member to be magnetized is fixed, is inserted into the through hole, and is movable in an axial direction relative to the through hole.

10. The safety switch according to claim 1, wherein the actuator further includes a biasing member that biases the member to be magnetized in a retracting direction.

11. The safety switch according to claim 10, wherein
the sleeve has a first-end flange extending in a radial direction, and
the biasing member is arranged between the first-end flange and the actuator attachment portion.

12. The safety switch according to claim 11, wherein
the sleeve has a second-end flange on a side opposite to the first-end flange, and
a cushion member is arranged between the second-end flange and the actuator attachment portion.

13. The safety switch according to claim 10, wherein the biasing member is a compression coil spring.

14. The safety switch according to claim 13, wherein the compression coil spring is formed with a spiral spring having a trapezoidal shape in a side view and having a diameter gradually reduced in an axial direction, and the compression coil spring having a flat shape in the side view in a compressed state.

15. A safety switch comprising:
a switch body arranged in a compartment fixed portion of a compartment system that comparts an operation region in which an apparatus operates;
an actuator installed in a movable portion movable relative to the compartment fixed portion;
an electromagnet that is provided on the switch body and has an attracting surface;
a member to be magnetized that is provided on the actuator, is attracted by the electromagnet, and has a surface to be attracted which comes into contact with the attracting surface; and
a movement mechanism that moves at least one of the attracting surface or the surface to be attracted toward another, the safety switch detecting that the actuator is within a predetermined range with respect to the switch body,

16. The safety switch according to claim 15, wherein the electromagnet attracts the member to be magnetized with a certain attracting force or more after the attracting surface and the surface to be attracted are brought into contact with each other by the movement mechanism.
